# EUROPEAN PATENT SPECIFICATION

(11) **EP 3 027 408 B1**
(45) Date of publication and mention of the grant of the patent: **26.09.2018**
(21) Application number: 14755900.9
(22) Date of filing: 20.08.2014
(51) Int. Cl.: B32B 17/10, C09K 21/14

(54) **FIRE RESISTANT GLAZING UNIT**
FEUERFESTE VERGLASUNGSEINHEIT
VITRAGE ANTI-FEU

(30) Priority: 20.08.2013 GB 201314880
(43) Date of publication of application: 08.06.2016
(73) Proprietor: Pyroguard UK Limited, Haydock, St. Helens WA11 9GA (GB)
(72) Inventor: CROOK, Vincent, Haydock St Helens WA11 9GA (GB); ALI, Muhammad, I., Haydock St Helens WA11 9GA (GB)
(74) Representative: HGF Limited
(86) International application number: PCT/GB2014/052550
(87) International publication number: WO 2015/025159

(56) References cited:
- US-A- 4 209 413
- US-A1- 2003 004 247
- US-A1- 2010 129 669
- US-A1- 2011 135 896
- US-A1- 2012 205 600

## Description

### INTRODUCTION

The present invention relates to a fire resistant glazing unit. The present invention also relates to a process for the manufacture of the glazing units of the invention and to a curable gelling composition which is used in the manufacture of these glazing units.

### BACKGROUND ART

Glazing, such as "insulated glazing units" (IGUs) and the like, are widely used in both domestic environments (e.g. double-glazed windows for homes) and in industrial settings.

Typically glazing is not well suited to environments where an inherent fire risk exists.

In general, glazing suffers from poor fire resistance due to the vulnerability of glass to thermal shock and the resultant loss of integrity. This can be a problem when considering the safety of users of the building in the event of a fire. Furthermore, in many countries safety regulations specify the fire resistance that needs to be exhibited by glazing used in a particular location.

Fire resistance is the ability of a barrier to control the passage of the products of fire from one side of the barrier to the other, to a defined level for a defined time under standard conditions of test. Three properties are commonly defined: Integrity (termed E) - The ability to control the passage of flames and hot gases, (thus preventing ignition on the unexposed face), Radiation (termed W) - The ability to control radiated heat emerging from the unexposed face and Insulation (termed I) - The ability to control conducted heat arriving at the unexposed face

This has led to classification systems for fire resistant glazing. For example, in much of Europe, regulations classify the fire resistance of glazing by the measurement of the minimum time for which the glazing maintains: (i) its structural integrity (termed E),; (ii) its structural integrity and radiation reduction (within specified limits) (termed EW),; and (iii) its structural integrity and insulation (within specified limits) (termed El); when exposed to a fire. Standard tests to determine the classification of the fire resistance of glazing are defined and typically involve exposing the one side of the glazing unit to a fire and monitoring the integrity of the glazing, and/or temperature levels on the opposing side of the glazing, over time.

Fire resistant glazing in which the internal space between the transparent glass panes is filled with an interlayer of aqueous fire-resistant gel are described in US 4264681 (SAINT GOBAIN), WO 03/061963 (FLAMRO), and WO 2009/071409 (FLAMRO). Fire resistant glazing comprising silicate based fire-resistant interlayers are also known (see, for example, WO2008/084083 (PILKINGTON) and, WO2008/053247 (PILKINGTON)). These are commonly referred to either as glazing units or glazing laminates.

However, there remains a need for new and improved fire resistant glazing. In particular, there is a growing need for fire resistant glazing that meets the most stringent fire resistant criteria. Commonly, in Europe this means that the glazing maintains it's integrity, provides a barrier from radiation emitted (the radiation measured at 1 m from the sample is to remain below 15 kW/m²) and provides insulation from the fire (the temperature of the cold side of the glazing unit remains less than 140 °C on average and no individual spot exceeds a temperature of 180 °C above ambient) for a defined duration, most commonly 30 or 60 minutes. In addition, there are emerging market requirements for glazing that can maintain its integrity, radiation reduction and/or heat insulation for over 60 mins.

It is therefore an object of the present invention to provide glazing units that meet these stringent fire resistant criteria. Specifically, the object of the present invention is to provide glazing units which provide excellent insulation whilst also providing an excellent integrity and radiation barrier extending beyond the duration of insulation.

The present Applicant's co-pending unpublished PCT Application No. PCT/GB2013/050425 discloses a fire resistant glazing and curable gelling compositions for the manufacture thereof. Another object of the invention is to produce glazing units with improved service lifetime in terms of both their fire-resistant properties and appearance.

### SUMMARY OF THE INVENTION

According to an aspect of the present invention there is provided a glazing unit comprising a first transparent pane and a second transparent pane with an interlayer disposed therebetween, wherein the interlayer is a fire-resistant hydrogel interlayer formed by curing a gelling composition; wherein the gelling composition comprises or is obtained by mixing together:
a curable hydrogel-forming component;
one or more metal(I) and/or metal(II) salts;
a gel stabilising agent; and
an aqueous vehicle;
wherein the gel stabilising agent is (or comprises) a compound having a multivalent central tin (Sn) atom;
wherein the composition has an acidic pH wherein the pH is greater than or equal to pH 3.

According to an aspect of the present invention there is provided a gelling composition for forming a fire-resistant hydrogel interlayer, the gelling composition comprising or obtained by mixing together:
a curable hydrogel-forming component
one or more metal(I) and/or metal(II) salts;
a gel stabilising agent; and
an aqueous vehicle;
wherein the gel stabilising agent is (or comprises) a compound having a multivalent central tin (Sn) atom;
wherein the composition has an acidic pH wherein the pH is greater than or equal to pH 3.

According to an aspect of the present invention there is provided a method of manufacturing a gelling composition for forming a fire-resistant hydrogel interlayer within a glazing unit, the method comprising mixing together:
a curable hydrogel-forming;
one or more metal(I) and/or metal(II) salts;
a gel stabilising agent; and
an aqueous vehicle;
wherein the gel stabilising agent is (or comprises) a compound having a multivalent central tin (Sn) atom;
wherein the composition has an acidic pH wherein the pH is greater than or equal to pH 3.

According to an aspect of the present invention there is provided a process for forming a glazing unit, the process comprising:
i) providing a first and a second transparent pane;
ii) partially assembling the glazing unit such that the first and second transparent panes are spaced apart from one another and a sealing means holds the first and second panes in position; wherein:
   the sealing means comprises an opening; and
   the first and second panes and the sealing means together define an internal space;
iii) delivering a gelling composition, as claimed in claim 12, into the internal space through the opening in the sealing means;
iv) closing the opening in the sealing means to provide a sealed internal space; and
v) curing the gelling composition to provide a hydrogel gel interlayer within the internal space;
wherein the gel is bonded to the inner surfaces of the first and/or second transparent panes either inherently or by either coating at least one of the internal surfaces of the first and/or second panes with a coupling agent prior to step (iii) or incorporating the coupling agent into the gelling composition.

The glazing units of the invention provide a durable radiation barrier in the event of a fire, which duly protects those on the "cold-side" of the glazing units for longer. The excellent performance of the hydrogel interlayer allows for thinner glazing units (i.e. with less space between the respective panes of glass), thus reducing the overall bulk of the glazing units, and making triple-glazing units (and beyond) more viable. In particular, the hydrogel interlayer exhibits good stability. In particular, it remains transparent over normal environmental temperature ranges and does not discolour on prolonged exposure to sunlight.

Upon exposure to a fire, the intumescent properties of the hydrogel interlayer cause it to expand towards the heat source especially if the transparent pane on the fire side of the glazing unit becomes compromised. The intumescent property is generally as a result of bubble formation during the resultant controlled release of water from the hydrogel. This intumescent behaviour provides passive protection to the "cold side" of the glazing unit and helps suppress an increase in temperature on the "cold side". In particular, the hydrogel interlayer can expand and deform as it absorbs heat energy from the fire. The ability to do this without forming holes enhances the protection conferred to the cold side of the glazing unit. Moreover, a high melting point inorganic crust tends to form on the surface of the swelled hydrogel layer which further shields the "cold-side" from the fire and maintains the integrity of the glazing unit for longer.

The gelling compositions of the present invention used to form the hydrogel interlayers are safe to handle, easy to manufacture, and environmentally friendly. Such gelling compositions are also compatible with a wide variety of transparent materials. Moreover, the hydrogel interlayers formed from the gelling composition of the invention are extremely durable, many over a range of temperatures (both hot and cold).

Without wishing to be bound by theory, it is thought that the advantages of the invention stem from the balance of particular ingredients, their respective amounts, and the pH of the gelling compositions utilised. The gel stabilising agent is instrumental in prolonging the lifetime of the glazing interlayers of the invention and for reducing the rate of degradation of the hydrogels.

Features including optional, suitable, and preferred features of any aspect of the present invention are, unless otherwise stated, also optional, suitable, and preferred features in relation to any other aspect of the present invention.

### BRIEF DESCRIPTION OF THE DRAWINGS

To provide a better understanding of the invention, the invention is further described by way of example in reference to the following figures, in which:

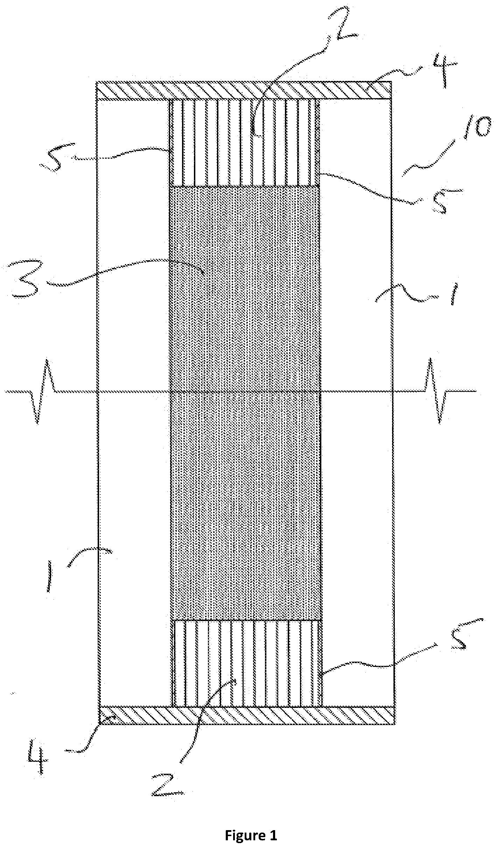

FIG. 1 is a cross-sectional view of a glazed unit.

### DETAILED DESCRIPTION OF THE INVENTION

### Definitions

Herein, a gelling composition suitable "for forming a fire-resistant hydrogel interlayer within a glazing unit" is a composition which cures to form a fire-resistant (transparent) hydrogel that may suitably sit between two panes of glazing in a glazing unit to thereby impart (additional) fire-resistance to the glazing unit as a whole.

The term "transparent pane" is used herein to refer to any transparent material suitable for use in the formation of a glazing unit. Examples of suitable transparent panes include panes of glass or transparent plastic (e.g. polycarbonate).

The term "curable" is used herein to refer to a gelling composition which, upon exposure to sufficient heat or radiation (e.g. UV radiation), permanently changes its physical state. Typically, the physical state changes as polymerisation and polymer cross-linking reactions occur. Curing typically leads to a hardening of the gelling composition.

The term "hydrogel" is used herein to refer to a hydrated gel comprising a hydrophilic polymer network.

The term "cured gelling composition" is used herein to refer to the hydrogel formed following the curing of the gelling composition defined herein.

Unless otherwise stated, pH is measured at standard temperature and pressure as defined by the National Institute of Standards and Technology (NIST), i.e. 20°C and 101.325 kPa (1 atm).

An "acidic pH" is, as would be understood by those skilled in the art, a pH less than pH 7.

The term "aqueous vehicle" refers to a predominantly water based medium.

The term "gel stabilising agent" refers to an agent which increases the stability of the cured gelling composition, suitably in terms of its service lifetime. Over prolonged periods, the hydrogel may begin degrade, and the gel stabilising agent suitably reduces the rate of degradation.

The term "multivalent" suitably means polyvalent.

Herein, the term "valence", "valency", and other associated terms (e.g. multivalent), when used in relation to a given central atom, are well understood in the art, and suitably refers to the number of bonds (i.e. valence bonds, whether ionic or covalent) formed (or that can be formed) between said central atom and peripheral atoms or groups. In other words, the valency of a given central atom may be considered as the maximum number of univalent peripheral atoms (or groups) that can combine with said central atom or group. For example, a metal compound such as tin tetrachloride (SnCl₄) comprises tin as the central metal atom, which has a valency of 4 (also an oxidation state of +4). Valency therefore often corresponds with oxidation state. In another example, the compound is tetraethoxysilane (TEOS) comprises silicon as the central atom, which in this case also has a valency of 4. Here, the silicon-ethoxy bonds are generally considered covalent bonds.

Herein, the term "central atom" refers to any atom which may be considered substantially at the centre of a molecule or compound. For example, in metal compounds which comprise a metal atom that is bonded or otherwise associated with other peripheral atoms or groups, the metal of the metal would be considered the central atom. In silicon compounds comprising silicon covalently bonded to peripheral groups, the silicon atom would be deemed the central atom.

Herein, the term "peripheral atom" or "peripheral group" refers to an atom or group which is ionically or covalently bonded (or otherwise associated) with a central atom of a compound.

Herein, groups of the periodic table (e.g. Group 4 and/or Group 14 metals) are referred to using the modern numbering (*group 1* to *group 18*) recommended by the International Union of Pure and Applied Chemistry (IUPAC).

Herein, the term "addition polymerisation", which is well understood in the art, refers to chain-growth polymerization wherein polymerisable functional groups (i.e. "addition polymerisable groups") become linked together, suitably such that the addition polymerisable groups are themselves incorporated into the polymerised product (albeit said groups may be transformed in the process - e.g. from unsaturated to saturated states). Typically the relevant polymerisable functional groups are initially unsaturated groups, typically double or triple carbon-carbon bonds. Typically addition polymerisation involves the breaking of bonds (typically π-bonds) of the relevant functional groups and the formation of new bonds between neighbouring polymerisable functional group. The simplest addition polymerisable groups are vinyl groups, which polymerise to form long-chain alkanes. Typically such processes are free-radically initiated (e.g. optionally following an initial homolysis step, e.g. of an initiator such as a photoinitiator) and suitably thereafter free-radically propagated. Addition polymerisation may be contrasted with "condensation polymerisation" which generally involves the release of condensates during polymerisation (e.g. generally a small molecule, e.g. water, or alcohol, which is lost during polymerisation). A typical example of a condensation polymerisation involves the polymerisation of "condensation polymerisable" monomers such as alkoxysilanes (which have alkoxy "condensation polymerisable groups"), which may link together to form polysiloxanes whilst yielding alkoxy/alcohol condensate by-products.

Herein, the term "addition polymerisable group" (e.g. vinyl group) is a functional group capable of undergoing or partaking in "addition polymerization", suitably such that said functional group is incorporated into the ultimate polymer product (albeit suitably in a transformed form), e.g. such as organic groups capable of taking part in addition polymerisation (e.g. vinyl, alkene, alkyne, acrylate, etc.). This suitably contrasts with "condensation polymerisable groups" which are displaced/displacable as condensate by-products during condensation polymerisation.

The term "(m-nC)alkyl" refers to an alkyl group having m to n carbon atoms.

Unless stated otherwise, where a composition is said to comprise a particular component in a particular weight percentage (wt% or % w/w), the weight percentage of said component is relative to the total weight of the composition as a whole. Suitably, the sum of all weight percentages given for components in relation to a given composition is less than or equal to 100%. Where a composition is said to consist of the particular components, the sum of all the weight percentages is 100%.

The term "consists essentially of" used herein in relation to the constitution of a given material, indicates that the given material consists almost entirely of a given constituent, suitably at least 90% w/w, more suitably at least 95% w/w, most suitably at least 99% w/w. For example, the phrase "the 'material' consists essentially of constituent X'" indicates that the 'material' comprises at least 90% w/w constituent X', more suitably at least 95% w/w, most suitably at least 99% w.w.

In this specification the term "alkyl" includes both straight and branched chain alkyl groups. References to individual alkyl groups such as "propyl" are specific for the straight chain version only and references to individual branched chain alkyl groups such as "isopropyl" are specific for the branched chain version only. For example, "(1-6C)alkyl" includes (1-4C)alkyl, (1-3C)alkyl, propyl, isopropyl and t-butyl. A similar convention applies to other radicals, for example "phenyl(1-6C)alkyl" includes phenyl(1-4C)alkyl, benzyl, 1-phenylethyl and 2-phenylethyl.

The term "(m-nC)" or "(m-nC) group" used alone or as a prefix, refers to any group having m to n carbon atoms.

An "alkylene," "alkenylene," or "alkynylene" group is an alkyl, alkenyl, or alkynyl group that is positioned between and serves to connect two other chemical groups. Thus, "(1-6C)alkylene" means a linear saturated divalent hydrocarbon radical of one to six carbon atoms or a branched saturated divalent hydrocarbon radical of three to six carbon atoms, for example, methylene, ethylene, propylene, 2-methylpropylene, pentylene, and the like.

"(2-6C)alkenylene" means a linear divalent hydrocarbon radical of two to six carbon atoms or a branched divalent hydrocarbon radical of three to six carbon atoms, containing at least one double bond, for example, as in ethenylene, 2,4-pentadienylene, and the like.

"(2-6C)alkynylene" means a linear divalent hydrocarbon radical of two to six carbon atoms or a branched divalent hydrocarbon radical of three to six carbon atoms, containing at least one triple bond, for example, as in ethynylene, propynylene, and butynylene and the like.

"(3-8C)cycloalkyl" means a hydrocarbon ring containing from 3 to 8 carbon atoms, for example, cyclopropyl, cyclobutyl, cyclopentyl, cyclohexyl, cycloheptyl or bicyclo[2.2.1]heptyl.

"(3-8C)cycloalkenyl" means a hydrocarbon ring containing at least one double bond, for example, cyclobutenyl, cyclopentenyl, cyclohexenyl or cycloheptenyl, such as 3-cyclohexen-1-yl, or cyclooctenyl.

"(3-8C)cycloalkyl-(1-6C)alkylene" means a (3-8C)cycloalkyl group covalently attached to a (1-6C)alkylene group, both of which are defined herein.

The term "halo" or "halogeno" refers to fluoro, chloro, bromo and iodo.

The term "heterocyclyl", "heterocyclic" or "heterocycle" means a non-aromatic saturated or partially saturated monocyclic, fused, bridged, or spiro bicyclic heterocyclic ring system(s). The term heterocyclyl includes both monovalent species and divalent species. Monocyclic heterocyclic rings contain from about 3 to 12 (suitably from 3 to 7) ring atoms, with from 1 to 5 (suitably 1, 2 or 3) heteroatoms selected from nitrogen, oxygen or sulfur in the ring. Bicyclic heterocycles contain from 7 to 17 member atoms, suitably 7 to 12 member atoms, in the ring. Bicyclic heterocycles contain from about 7 to about 17 ring atoms, suitably from 7 to 12 ring atoms. Bicyclic heterocyclic(s) rings may be fused, spiro, or bridged ring systems. Examples of heterocyclic groups include cyclic ethers such as oxiranyl, oxetanyl, tetrahydrofuranyl, dioxanyl, and substituted cyclic ethers. Heterocycles containing nitrogen include, for example, azetidinyl, pyrrolidinyl, piperidinyl, piperazinyl, tetrahydrotriazinyl, tetrahydropyrazolyl, and the like. Typical sulfur containing heterocycles include tetrahydrothienyl, dihydro-1,3-dithiol, tetrahydro-2H-thiopyran, and hexahydrothiepine. Other heterocycles include dihydro-oxathiolyl, tetrahydro-oxazolyl, tetrahydro-oxadiazolyl, tetrahydrodioxazolyl, tetrahydro-oxathiazolyl, hexahydrotriazinyl, tetrahydro-oxazinyl, morpholinyl, thiomorpholinyl, tetrahydropyrimidinyl, dioxolinyl, octahydrobenzofuranyl, octahydrobenzimidazolyl, and octahydrobenzothiazolyl. For heterocycles containing sulfur, the oxidized sulfur heterocycles containing SO or SO₂ groups are also included. Examples include the sulfoxide and sulfone forms of tetrahydrothienyl and thiomorpholinyl such as tetrahydrothiene 1,1-dioxide and thiomorpholinyl 1,1-dioxide. A suitable value for a heterocyclyl group which bears 1 or 2 oxo (=O) or thioxo (=S) substituents is, for example, 2-oxopyrrolidinyl, 2-thioxopyrrolidinyl, 2-oxoimidazolidinyl, 2-thioxoimidazolidinyl, 2-oxopiperidinyl, 2,5-dioxopyrrolidinyl, 2,5-dioxoimidazolidinyl or 2,6-dioxopiperidinyl. Particular heterocyclyl groups are saturated monocyclic 3 to 7 membered heterocyclyls containing 1, 2 or 3 heteroatoms selected from nitrogen, oxygen or sulfur, for example azetidinyl, tetrahydrofuranyl, tetrahydropyranyl, pyrrolidinyl, morpholinyl, tetrahydrothienyl, tetrahydrothienyl 1,1-dioxide, thiomorpholinyl, thiomorpholinyl 1,1-dioxide, piperidinyl, homopiperidinyl, piperazinyl or homopiperazinyl. As the skilled person would appreciate, any heterocycle may be linked to another group via any suitable atom, such as via a carbon or nitrogen atom. However, reference herein to piperidino or morpholino refers to a piperidin-1-yl or morpholin-4-yl ring that is linked via the ring nitrogen.

"Heterocyclyl(1-6C)alkyl" means a heterocyclyl group covalently attached to a (1-6C)alkylene group, both of which are defined herein.

The term "heteroaryl" or "heteroaromatic" means an aromatic mono-, bi-, or polycyclic ring incorporating one or more (for example 1-4, particularly 1, 2 or 3) heteroatoms selected from nitrogen, oxygen or sulfur. The term heteroaryl includes both monovalent species and divalent species. Examples of heteroaryl groups are monocyclic and bicyclic groups containing from five to twelve ring members, and more usually from five to ten ring members. The heteroaryl group can be, for example, a 5- or 6-membered monocyclic ring or a 9- or 10-membered bicyclic ring, for example a bicyclic structure formed from fused five and six membered rings or two fused six membered rings. Each ring may contain up to about four heteroatoms typically selected from nitrogen, sulfur and oxygen. Typically the heteroaryl ring will contain up to 3 heteroatoms, more usually up to 2, for example a single heteroatom. In one embodiment, the heteroaryl ring contains at least one ring nitrogen atom. The nitrogen atoms in the heteroaryl rings can be basic, as in the case of an imidazole or pyridine, or essentially non-basic as in the case of an indole or pyrrole nitrogen. In general the number of basic nitrogen atoms present in the heteroaryl group, including any amino group substituents of the ring, will be less than five.

Examples of heteroaryl include furyl, pyrrolyl, thienyl, oxazolyl, isoxazolyl, imidazolyl, pyrazolyl, thiazolyl, isothiazolyl, oxadiazolyl, thiadiazolyl, triazolyl, tetrazolyl, pyridyl, pyridazinyl, pyrimidinyl, pyrazinyl, 1,3,5-triazenyl, benzofuranyl, indolyl, isoindolyl, benzothienyl, benzoxazolyl, benzimidazolyl, benzothiazolyl, benzothiazolyl, indazolyl, purinyl, benzofurazanyl, quinolyl, isoquinolyl, quinazolinyl, quinoxalinyl, cinnolinyl, pteridinyl, naphthyridinyl, carbazolyl, phenazinyl, benzisoquinolinyl, pyridopyrazinyl, thieno[2,3-b]furanyl, 2H-furo[3,2-b]-pyranyl, 5H-pyrido[2,3-d]-o-oxazinyl, 1H-pyrazolo[4,3-d]-oxazolyl, 4H-imidazo[4,5-d]thiazolyl, pyrazino[2,3-d]pyridazinyl, imidazo[2,1-b]thiazolyl, imidazo[1,2-b][1,2,4]triazinyl. "Heteroaryl" also covers partially aromatic bi- or polycyclic ring systems wherein at least one ring is an aromatic ring and one or more of the other ring(s) is a non-aromatic, saturated or partially saturated ring, provided at least one ring contains one or more heteroatoms selected from nitrogen, oxygen or sulfur. Examples of partially aromatic heteroaryl groups include for example, tetrahydroisoquinolinyl, tetrahydroquinolinyl, 2-oxo-1,2,3,4-tetrahydroquinolinyl, dihydrobenzthienyl, dihydrobenzfuranyl, 2,3-dihydro-benzo[1,4]dioxinyl, benzo[1,3]dioxolyl, 2,2-dioxo-1,3-dihydro-2-benzothienyl, 4,5,6,7-tetrahydrobenzofuranyl, indolinyl, 1,2,3,4-tetrahydro-1,8-naphthyridinyl, 1,2,3,4-tetrahydropyrido[2,3-*b*]pyrazinyl and 3,4-dihydro-2*H*-pyrido[3,2-*b*][1,4]oxazinyl

Examples of five membered heteroaryl groups include but are not limited to pyrrolyl, furanyl, thienyl, imidazolyl, furazanyl, oxazolyl, oxadiazolyl, oxatriazolyl, isoxazolyl, thiazolyl, isothiazolyl, pyrazolyl, triazolyl and tetrazolyl groups.

Examples of six membered heteroaryl groups include but are not limited to pyridyl, pyrazinyl, pyridazinyl, pyrimidinyl and triazinyl.

A bicyclic heteroaryl group may be, for example, a group selected from:
a benzene ring fused to a 5- or 6-membered ring containing 1, 2 or 3 ring heteroatoms;
a pyridine ring fused to a 5- or 6-membered ring containing 1, 2 or 3 ring heteroatoms;
a pyrimidine ring fused to a 5- or 6-membered ring containing 1 or 2 ring heteroatoms;
a pyrrole ring fused to a 5- or 6-membered ring containing 1, 2 or 3 ring heteroatoms;
a pyrazole ring fused to a 5- or 6-membered ring containing 1 or 2 ring heteroatoms;
a pyrazine ring fused to a 5- or 6-membered ring containing 1 or 2 ring heteroatoms;
an imidazole ring fused to a 5- or 6-membered ring containing 1 or 2 ring heteroatoms;
an oxazole ring fused to a 5- or 6-membered ring containing 1 or 2 ring heteroatoms;
an isoxazole ring fused to a 5- or 6-membered ring containing 1 or 2 ring heteroatoms;
a thiazole ring fused to a 5- or 6-membered ring containing 1 or 2 ring heteroatoms;
an isothiazole ring fused to a 5- or 6-membered ring containing 1 or 2 ring heteroatoms;
a thiophene ring fused to a 5- or 6-membered ring containing 1, 2 or 3 ring heteroatoms;
a furan ring fused to a 5- or 6-membered ring containing 1, 2 or 3 ring heteroatoms;
a cyclohexyl ring fused to a 5- or 6-membered heteroaromatic ring containing 1, 2 or 3 ring heteroatoms; and
a cyclopentyl ring fused to a 5- or 6-membered heteroaromatic ring containing 1, 2 or 3 ring heteroatoms.

Particular examples of bicyclic heteroaryl groups containing a six membered ring fused to a five membered ring include but are not limited to benzfuranyl, benzthiophenyl, benzimidazolyl, benzoxazolyl, benzisoxazolyl, benzthiazolyl, benzisothiazolyl, isobenzofuranyl, indolyl, isoindolyl, indolizinyl, indolinyl, isoindolinyl, purinyl (e.g., adeninyl, guaninyl), indazolyl, benzodioxolyl and pyrazolopyridinyl groups.

Particular examples of bicyclic heteroaryl groups containing two fused six membered rings include but are not limited to quinolinyl, isoquinolinyl, chromanyl, thiochromanyl, chromenyl, isochromenyl, chromanyl, isochromanyl, benzodioxanyl, quinolizinyl, benzoxazinyl, benzodiazinyl, pyridopyridinyl, quinoxalinyl, quinazolinyl, cinnolinyl, phthalazinyl, naphthyridinyl and pteridinyl groups.

"Heteroaryl(1-6C)alkyl" means a heteroaryl group covalently attached to a (1-6C)alkylene group, both of which are defined herein. Examples of heteroaralkyl groups include pyridin-3-ylmethyl, 3-(benzofuran-2-yl)propyl, and the like.

The term "aryl" means a cyclic or polycyclic aromatic ring having from 5 to 12 carbon atoms. The term aryl includes both monovalent species and divalent species. Examples of aryl groups include, but are not limited to, phenyl, biphenyl, naphthyl and the like. In particular embodiment, an aryl is phenyl.

The term "aryl(1-6C)alkyl" means an aryl group covalently attached to a (1-6C)alkylene group, both of which are defined herein. Examples of aryl-(1-6C)alkyl groups include benzyl, phenylethyl, and the like

This specification also makes use of several composite terms to describe groups comprising more than one functionality. Such terms will be understood by a person skilled in the art. For example heterocyclyl(m-nC)alkyl comprises (m-nC)alkyl substituted by heterocyclyl.

The term "optionally substituted" refers to either groups, structures, or molecules that are substituted and those that are not substituted.

Where optional substituents are chosen from "one or more" groups it is to be understood that this definition includes all substituents being chosen from one of the specified groups or the substituents being chosen from two or more of the specified groups.

### The Gelling Composition

The present invention provides a gelling composition as defined herein and in appended claim 12. Most suitably, the gelling composition is a fire-resistant gelling composition or a gelling composition which is curable to form a fire-resistant gel. The term "fire-resistant" is well understood in the art.

Herein, where the gelling composition (or cured hydrogel formed therefrom) is said to "comprise", "consist of", or be otherwise constituted from a particular ingredient (optionally in a given quantity), this suitably means that this particular ingredient (optionally in the given quantity) is used in the formation of the gelling composition.

The gelling composition is suitably an optically transparent gelling composition. The gelling composition is suitably curable to provide an optically transparent hydrogel.

The gelling composition is suitably in the form a liquid having a viscosity sufficiently low so as to enable it to be poured or injected into the internal space of a glazing unit (as defined further herein). The gelling composition suitably has a viscosity which is sufficiently low so that any bubbles (e.g. formed on pouring) float to the top and can be readily removed (e.g. by venting prior to the gelling composition being sealed in place). Furthermore, the gelling composition is a curable gelling composition, which can be cured, for example, by the application of heat or radiation (e.g. UV), to form a polyelectrolyte hydrogel. Suitably the gelling composition is curable by ultraviolet (UV) radiation curing.

The gelling composition of the invention is suitable for use in the preparation of a glazing unit as defined herein. In particular, the gelling composition is suitable for forming a cured hydrogel interlayer of a glazing unit as defined herein, which imparts heat insulation and significant fire resistant properties to the glazing unit.

The gelling composition may comprise (or be formed by mixing together):
5-40% w/w of a curable hydrogel-forming component;
15-60% w/w of one or more salts;
40-90% w/w of an aqueous vehicle;
a gel stabilising agent; and
optionally one or more additional ingredients as defined herein.

The gelling composition may comprise (or be formed by mixing together):
5-40% w/w of a curable hydrogel-forming component;
10-60% w/w of one or more salts;
40-90% w/w of an aqueous vehicle;
0.05-1.5% w/w of a gel stabilising agent; and
optionally one or more additional ingredients as defined herein.

The gelling composition may comprise (or be formed by mixing together):
5-40% w/w of a curable hydrogel-forming component;
10-50% w/w of one or more salts (by effective non-solvated weight concentration);
40-90% w/w of an aqueous vehicle;
a gel stabilising agent (by effective non-solvated weight concentration); and
optionally one or more additional ingredients as defined herein.

The gelling composition may comprise (or be formed by mixing together):
5-40% w/w of a curable hydrogel-forming component;
10-50% w/w of one or more salts (by effective non-solvated weight concentration);
40-90% w/w of an aqueous vehicle;
0.05-1.5% w/w of a gel stabilising agent (by effective non-solvated weight concentration); and
optionally one or more additional ingredients as defined herein.

The gelling composition may comprise one or more additional ingredients. Such additional ingredients may include a cross-linking agent (see optional definitions below), an initiator (see optional definitions below), a defoamer (see optional definitions below), an anti-freeze or any mixture thereof.

### The hydrogel-forming component

The hydrogel-forming component of the gelling composition forms the hydrophilic hydrogel polymer matrix following curing.

The hydrogel-forming component is suitably an organic hydrogel-forming component.

The curability of the hydrogel-forming component facilitates the manufacture of the glazing units of the invention because the gelling composition is initially mobile and sufficiently fluid prior to curing so that it can be delivered into the internal space of the glazing units defined herein and then cured *in situ* to form the hydrogel interlayer.

The hydrogel forming component of the gelling composition forms the polyelectrolyte network of the hydrogel following curing. Such polyelectrolytes suitably dissociate (e.g. from their corresponding counterions) in aqueous solution to yield charged polymers. Such polyelectrolytes are suitably "weak" polyelectrolytes (i.e. with a pKₐ between 2 and 10, more suitably between 2 and 7). Suitably, such polyelectrolytes are polyacids which dissociate in aqueous solution to yield polyanions (e.g. carboxylate).

The hydrogel-forming component suitably comprises one or more hydrophilic polymerisable monomers and/or one or more hydrophilic pre-formed or partially formed polymers. In a particular embodiment, the hydrogel-forming component comprises polymerisable monomers, but is (substantially) free of any pre-formed polymers.

In an embodiment, the polymerisable monomer is a vinyl containing monomer that suitably polymerises (e.g. on curing) to form a polyelectrolyte having pendant ionisable groups, especially pendant acidic groups.

In an embodiment, the pre-formed polymer is polyvinyl based polymer, especially a polyvinyl-based polymer having pendant ionisable substituent groups, especially pendant acidic groups.

In a particular embodiment, the hydrogel-forming component comprises a polymerisable hydrophilic monomer. The polymerisable (suitably hydrophilic) monomer is suitably an acidic monomer, suitably bearing a carboxylic acid moiety (or a moiety which is readily converted to a carboxylic acid moiety, e.g. *via* hydrolysis, such as an ester (e.g. (1-4C)alkyl ester), acid amide, nitrile, or anhydride thereof). The polymerisable monomer suitably facilitates the formation of acidic hydrogels upon curing.

In an embodiment, the polymerisable monomer is selected from the group consisting of acids such as acrylic acid, methacrylic acid, itaconic acid, vinylsulfonic acid, allylsulfonic acid, methallylsulfonic acid, styrenesulfonic acid, 2-acrylamide-2-phenylpropanesulfonic acid, 2-acrylamide- 2-methyl-propanesulfonic acid, vinyl phosphoric acid, vinyl phosphate, (meth)acrylate of ethylene oxide-modified phosphoric acid and the like, and salts thereof; and amines such as N,N-dimethylaminoethyl methacrylate, N,N-diethylaminoethyl methacrylate, N.N-dimethylaminoethyl acrylate, N,N-dimethylaminopropylmethacrylamide, N,N-dimethylaminopropylacrylamide and the like.,. It is possible to use an acrylate, an polymerisable anhydride, a methacrylate, acrylamide, methacrylamide, acrylonitrile, vinyl phosphoric acid esters or the like as a copolymerizable monomer, since the resulting copolymer can be hydrolysed to impart iconicity. In addition, it may be advantageous to incorporate a non ionisable, non hydrolysable, comonomer in order to impart other properties into the matrix.

In a particular embodiment, the polymerisable monomer is an acrylate or alkylacrylate monomer of Formula (I): 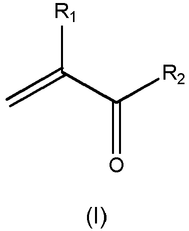
wherein R₁ is H, or (1-2C)alkyl;
R₂ is selected from OH, OR₃, NH₂, NHR₃, and NR₃R₄; and
R₃ and R₄ are independently (1-2C)alkyl;
or a salt thereof (e.g. metal carboxylate where R₂ is OH, where the metal counterion may be Na, Ca, Mg, etc.).

In an embodiment, R₁ is H or methyl.

In another embodiment, R₁ is H.

In an embodiment, R₂ is OH or NH₂.

In an embodiment, R₂ is OH.

Suitably the polymerisable monomer is acrylic acid or an alkylacrylic acid, which polymerise to form polyacrylic acid or a polyalkylacrylic acid polymers respectively.

In a particular embodiment, the hydrogel-forming component comprises acrylic acid. In a particular embodiment, the hydrogel-forming component is acrylic acid.

The hydrogel-forming component may comprise monomers and/or pre-formed polymers which afford either homopolymeric hydrogels or co-polymeric (including terpolymers and beyond) hydrogels.

In some embodiments, the hydrogel-forming component comprises monomers and/or pre-formed polymers which afford homopolymeric hydrogels. The hydrogel-forming component may comprise only a single polymerisable monomer which forms hydrogel homopolymers upon curing.

Alternatively, in some embodiments, the hydrogel-forming component comprises monomers and/or pre-formed polymers which afford co-polymeric hydrogels. The hydrogel-forming component may comprise more than one polymerisable monomer, as defined herein, which form hydrogel co-polymers upon curing. It is envisaged that incorporating co-monomers into the hydrogel may allow their properties to be fine tuned.

In a particular embodiment, the hydrogel-forming component comprises a pre-formed polymer. The pre-formed polymer may be a homopolymer or co-polymer. The pre-formed polymer is suitably acidic, most suitably bearing OH or carboxylic acid groups. The pre-formed polymer is suitably a polyacid or polyalcohol, most suitably a polyacrylic acid or polyalkylacrylic acid (e.g. polymethacrylic acid, polyethylacrylic acid).

References herein to acids and polyacids in relation to the hydrogel-forming component are also intended to include their corresponding salts (i.e. conjugate bases), especially metal salts, such as alkali metal salts or alkaline earth metal salts.

Suitably the gelling composition comprises 5-40% w/w hydrogel-forming component. In a particular embodiment, the gelling composition comprises 5-30% w/w hydrogel-forming component. In a particular embodiment, the gelling composition comprises 6-14% w/w hydrogel-forming component. In a particular embodiment, the gelling composition comprises 7-13% w/w hydrogel-forming component. In a particular embodiment, the gelling composition comprises 8-12% w/w hydrogel-forming component. In a particular embodiment, the hydrogel-forming component constitutes 9-11% w/w of the gelling composition.

Suitably the gelling composition comprises 5-40% w/w acrylic acid. In a particular embodiment, the gelling composition comprises 5-30% w/w acrylic acid. In a particular embodiment, the gelling composition comprises 6-14% w/w acrylic acid. In a particular embodiment, the gelling composition comprises 7-13% w/w acrylic acid. In a particular embodiment, the gelling composition comprises 8-12% w/w acrylic acid. In a particular embodiment, acrylic acid constitutes 9-11% w/w of the gelling composition.

### The Salt(s)

The one or more salt(s) are one or more metal(I) and/or metal(II) salts. The one or more salt(s) are suitably different from the gel stabilising agent.

The gelling composition (and cured gelling compositions formed therefrom) comprises one or more salts. The one or more salts may suitably be one or more organic and/or inorganic salts. Organic salts comprise at least an organic anion (e.g. acetate). Inorganic salts comprise both an inorganic cation (e.g. a metal cation) and an inorganic anion (e.g. oxide, sulphate, halide, etc.).

Each metal salt suitably comprises a metal cation. Each metal salt suitably comprises an organic (e.g. acetate) or inorganic (e.g. oxide, sulphate, etc.) anion.

The one or more metal salt(s) suitably comprise monovalent or divalent cations, or a combination thereof. Suitable monovalent cations include alkali metal monovalent cations (e.g. Na⁺, K⁺, Li⁺) or ammonium ions (NH₄⁺) or substituted ammonium ions such as alkyl ammonium species. Suitable divalent cations include alkaline earth metal divalent cations (e.g. Mg²⁺, Ca²⁺) or transition metal divalent cations (e.g. Zn²⁺). In a particular embodiment, the metal salt(s) comprises divalent cations, suitably selected from Mg²⁺, Ca²⁺, Zn²⁺, or a combination thereof. In a particular embodiment, the metal salt(s) comprises Mg²⁺ cations. In a particular embodiment, the cations of the one or more salts consist essentially of divalent cations, suitably essentially of Mg²⁺ cations. In a particular embodiment, the cations of the one or more salts consist of divalent cations, suitably of Mg²⁺ cations.

Suitably, the central metal atom of each of the one or more metal salt(s) has an atomic number (Z) less than or equal to 12 (i.e. Mg or lower). Suitably, the central metal atom of each of the one or more metal salt(s) has an atomic number (Z) greater than or equal to 3 (i.e. Li or higher). Suitably the central metal atom of each of the one or more metal salt(s) is selected from lithium, sodium, and magnesium, and is most preferably magnesium in all of the one or more metal salt(s).

In some embodiments, one or more of the salt(s) may be provided in solvated (e.g. hydrated) form. The weight of one mole of a solvated form of a particular salt (e.g. MgSO₄.7H₂O - M_{w} 246.47) is naturally higher than the weight of one mole of a corresponding unsolvated form of the same salt (anhydrous MgSO₄ - M_{w} 120.366). However, it is straightforward to convert the weight of a solvated form of a particular salt into its corresponding "effective non-solvated weight". For instance, 246.47g of MgSO₄.7H₂O equates to an "effective non-solvated weight" of 120.366g of MgSO₄. Likewise, a composition said to comprise 24.647 % w/w MgSO₄.7H₂O can be considered to comprise the salt in an effective non-solvated weight concentration/percentage of 12.0366 % w/w. Therefore, references herein to effective non-solvated weights or weight % of particular ingredients may be construed accordingly. For example, if a composition is said to require MgSO₄ in an effective non-solvated weight concentration of 12.0366 % w/w, this may be achieved using MgSO₄.7H₂O, so long as the effective non-solvated weight concentration of MgSO₄ is 12.0366% w/w in the final composition.

Herein, unless stated otherwise, any quantities (e.g. % w/w) given in relation to the one or more salts suitably includes total quantities of solvated salt(s) where they are provided in such solvated form. However, where "effective non-solvated weights" or "effective non-solvated weight concentration/percentages (% w/w)" are stated, this refers to the effective non-solvated weight or weight % of the particular salt(s) in question, and encompasses salt(s) provided in solvated form but in a quantity corresponding with (by converted it into) the stipulated effective non-solvated weight or weight concentration.

In an embodiment, the one or more salts constitute 10-60% w/w of the gelling composition. Suitably, the one or more salts suitably constitute 15-50% w/w of the gelling composition, suitably 20-45% w/w, suitably 30-40% w/w.

In an embodiment, the gelling composition comprises the one or more salts in an effective non-solvated weight concentration of 10-50% w/w, suitably 13-40% w/w, suitably 15 to 30% w/w, suitably 18-28% w/w, suitably 20-25% w/w.

The salt(s) may comprise any suitable anion as a counter ion to any of the above described cations. Particularly suitable anions include halide, sulphate, acetate, borate, silicate, oxide, hydroxide, or a combination thereof. In a particular embodiment, the anion is selected from sulphate, oxide, and hydroxide, or a combination thereof. In a particular embodiment, the salt(s) comprises sulphate anions.

In a particular embodiment, the salt(s) comprises an Mg²⁺ cation and one or more anions selected from sulphate, acetate and oxide. In a particular embodiment, the salt(s) comprises magnesium sulphate, suitably in hydrated form (most suitably MgSO₄.7H₂O). In a particular embodiment, MgSO₄.7H₂O comprises 5-25% w/w of the gelling composition, more suitably 15-25% w/w. In a particular embodiment, the gelling composition comprises MgSO₄ in an effective non-solvated weight concentration of 2.5-15 % w/w, suitably 7-12% w/w. In a particular embodiment, the salt(s) comprises magnesium acetate, suitably in hydrated form (most suitably Mg(OAc)₂.4H₂O). In a particular embodiment, Mg(OAc)₂.4H₂O comprises 5-25% w/w of the gelling composition, more suitably 15-25% w/w. In a particular embodiment, the gelling composition comprises Mg(OAc)₂ in an effective non-solvated weight concentration of 5-20 % w/w, suitably 9-15% w/w. In a particular embodiment, the salt(s) comprise magnesium oxide. In a particular embodiment, MgO comprises 0-5% w/w of the gelling composition, suitably 0.5-3.0% w/w, more suitably 2-2.8% w/w. In a particular embodiment, the gelling composition comprises metal salts including magnesium sulphate, magnesium oxide, and magnesium acetate. Suitably any magnesium oxide used is the "low iron" grade thereof. In a particular embodiment, the salt(s) are derived *in situ* by acid-base reaction using magnesium oxide.

In preferred embodiments, the salts include a mixture of metal salts. Suitably the mixture of metal salts comprises a mixture of anions. In a particular embodiment, the mixture of metal salts comprises a single metal cation and a mixture of anions. For example, the single metal cation may be magnesium (II). The mixture of anions may suitably comprise oxide, sulphate, and acetate.

It will be appreciated by those skilled in the art that references to the one or more salts, whether in general or in relation to particular specific embodiments, relate to the general or particular salt form(s) (i.e. in terms of cationic-anionic associations) of the salt starting material(s). The person skilled in the art would understand that any or all of the one or more salts may in fact adopt different salt forms within the gelling composition (or cured hydrogel) itself. For instance, when forming the gelling composition, a basic salt (e.g. MgO) may react with an acid (e.g. an acidic hydrogel-forming component - e.g. acrylic acid monomer) to form a salt of the acid *in situ.* In fact MgO is unlikely to exist as such in the gelling composition where the pH is acidic, since all MgO will have generally been neutralised.

Therefore, references to a gelling composition (or indeed the cured hydrogel adduct thereof) "comprising one or more salts", suitably indicates that the gelling composition comprises one or more salts and/or adducts thereof "formed by" (or derived from) mixing said one or more salts together with any other ingredients of the gelling composition.

Where specific salt(s) are stipulated herein, this preferably indicates that the gelling composition may be formed by either the specific salts stipulated or by alternative starting materials which may nevertheless give rise to the same gelling composition. For instance, in a particular embodiment, the gelling composition is obtained by employing the following salts:
- 15-25% w/w MgSO₄.7H₂O
- 2.2-2.8% w/w MgO
- 15-25% w/w Mg(OAc)₂.4H₂O
or alternatively by employing the following salts:
- 7-12% w/w MgSO₄ (by effective non-solvated weight concentration)
- 2.2-2.8% w/w MgO (by effective non-solvated weight concentration)
- 9-15% w/w Mg(OAc)₂ (by effective non-solvated weight concentration)
but it will be appreciated that replacing MgO with an equimolar amount of Mg(OH)₂ will yield the same salt adducts (e.g. through reaction with an acidic hydrogel-forming component) and that this variation is therefore covered by this same embodiment. Furthermore, the Mg(OAc)₂ may itself be formed *in situ* through the reaction of MgO with acetic acid and, as such, this embodiment includes gelling compositions formed in this manner without any pre-isolated Mg(OAc)₂ starting material. The person skilled in the art can readily determine, by methods well known in the art, the constitution of a gelling composition with respect to the one or more salts, and could readily determine the nature and quantity of any input salts required to produce said gelling composition. In particular, salts may be extracted (e.g. by Soxhlet extraction), isolated, characterised, and quantified.

The relatively high loading of the salt(s) in the gelling compositions of the invention duly influences the structure and properties of the hydrogel formed by curing the gelling composition.

Significantly, the salt(s) also contribute to the intumescent properties of the hydrogel, which in turn contributes to the passive fire resistant and heat insulation properties of the gel during a fire. The salt(s) can also contribute towards the maintenance of the pH of the gelling composition within the limits defined herein. For instance, metal salts such as MgO suitably raise the pH of the resulting gelling composition, though it will be understood by those skilled in the art that other suitable basifying salts (especially alkaline or basic salts) can be used to adjust the pH to achieve a desirable gelling composition. For instance, other suitable basifying salt(s), which may be used instead of or in addition to MgO, include alkali metal oxides/hydroxides (e.g. lithium or sodium oxide or hydroxide), or even ammonium hydroxide. The gelling composition may suitably comprise 0-5% w/w other basifying salt(s), suitably 0.1-3% w/w, suitably 0.5-2.5% w/w.

Furthermore, any polyvalent metal salts may also provide ionic species capable of forming electrostatic cross-links between the polymers in the hydrogel.

The salt(s) generally also form a high melting point crust on the surface of the hydrogel exposed to a fire. This crust is believed to contribute to the fire-resistant properties of the cured gelling compositions of the present invention.

The salt(s) suitably also contribute to an "anti-freeze" effect in either or both the gelling composition and cured hydrogel formed from the gelling composition. In a particular embodiment, the gelling composition comprises at least one salt which contributes to such an "anti-freeze" effect (i.e. an antifreeze component). Such an antifreeze component may be present within the gelling composition (and ultimate hydrogels formed therefrom) at the exclusion of any other more conventional antifreeze component. In a particular embodiment, the gelling composition (and hydrogels formed therefrom) are free from any (non-salt) organic or solvent-based antifreeze agents. Suitably, the antifreeze component also has fire-resistant properties. Suitably at least one salt contributing said anti-freeze effect is magnesium acetate or a hydrated form thereof. This salt suitably also contributes a buffering effect to the gelling compositions and/or to the ultimate hydrogel formed therefrom.

One skilled in the art would be able to achieve anti-freeze equally well by other means. Commonly by use of NaCl or KCl as described in US2010/0116416 A1. Alternatively the salts, or the lower alcohols described in US2010/7678291 may be incorporated in the gelling compositions. Among other examples described in US2010/7704406 B2, dicarboxyllic acid salts would also be suitable additives to the systems described herein. Larger polyhydroxy organic compounds are also useful to achieve an anti freeze effect such as ethylene glycol, propylene glycol, sorbitol and dextrose many of which are described in US2009/0258171.

### Gel Stabilising Agent

The gel stabilising agent is (or comprises) a compound having a multivalent central tin (Sn) atom. The compound(s) of the gel stabilising agent is/are suitably different from any of the one or more salts. Suitably, the gel stabilising agent is not (or does not comprise) any of the one or more salts as defined herein.

The gel stabilising agent may be a single compound, suitably a single compound as defined herein in relation to the gel stabilising agent. However, in some embodiments, the gel stabilising agent may comprise one or more (or even two or more) compounds, suitably one or more of the compounds as defined herein in relation to the gel stabilising agent. In the latter case (where there are two or more compounds), any amounts stipulated herein in relation to the gel stabilising agent may suitably relate to the total combined amount of the compounds of the gel stabilising agent. Moreover, where there are two or more compounds, suitably all such compounds conform with the definitions used herein in to the gel stabilising agent (or compound(s) thereof). Where the gel stabilising agent comprises two or more compounds, the compounds may be metal-based compounds as defined herein in relation to the gel stabilising agent, non-metal compounds as defined herein in relation to the gel stabilising agent, or a mixture thereof. In some embodiments, where the gel stabilising agent comprises two or more compounds, the compounds are either all metal-based compounds as defined herein or all non-metal based compounds as defined herein (i.e. of one type or the other).

Herein, references to and features of the gel stabilising agent may suitably relate to the one or more compounds thereof.

The gel stabilising agent is (or comprises) a compound having a multivalent central atom.

The gel stabilising agent is suitably free of (or suitably free of compounds comprising) any addition polymerisable groups, e.g. such as organic groups capable of taking part in addition polymerisation (e.g. vinyl, alkene, alkyne, acrylate, etc.). As such, the gel stabilising agent may comprise one or more condensation polymerisable monomers but suitably no addition polymerisable monomers.

The gel stabilising agent suitably constitutes between 0.01 and 5.0% w/w of the total gelling composition, more suitably between 0,025 and 2.0% w/w, more suitably between 0.05 and 1.5% w/w of the total gelling composition. The gel stabilising agent suitably constitutes an effective non-solvated concentration of between 0.01 and 5.0% w/w of the total gelling composition, more suitably between 0,025 and 2.0% w/w, more suitably between 0.05 and 1.5% w/w of the total gelling composition. If too much gel stabilising agent is present, clarity of the cured-hydrogels derived therefrom can be compromised and/or the fire-resistant properties of the cured-hydrogel can suffer (e.g. through the cured-hydrogel being too solid/brittle). Moreover, too much gel stabilising agent can compromise intumescence. The gel stabilising agent may be ineffective in performing is gel-stabilising function if not enough of the gel stabilising agent is present within the gelling compositions.

The gel stabilising agent is suitably water soluble, or suitably hydrolysable or otherwise reactive to dissolve in water.

The gel stabilising agent suitably improves the service lifetime of a cured gelling composition. As such, a cured gelling composition formed from a gelling composition which comprises a gel stabilising agent as defined herein is suitably more durable than a corresponding cured gelling composition formed from a gelling composition which is free of a gel stabilising composition as defined herein. The gel stabilising agent is suitably able to stabilise the structure of the hydrogel of the cured gelling composition, suitably *via* imparting a degree of cross-linking within the hydrogel, be it cross-linking through ionic, co-ordinative (i.e. dative), or covalent bonding. The gel stabilising agent suitably is (or comprises) a compound capable of forming multiple interactions, suitably by coordination, ionic, covalent, physical or electrostatic means. Suitably where the multivalent central atom is a metal such cross-linking may occur through ionic and/or co-ordinative bonding. Suitably where the multivalent central atom is a non-metal such cross-linking may occur through covalent bonding.

The multivalent central atom suitably has a valency of greater than or equal to 2. However, preferably the multivalent central atom has a valency of greater than or equal to 3, most preferably a valency of 4. The multivalent central atom suitably has a valency of less than or equal to 6, suitably less than or equal to 4.

Suitably the gel stabilising agent comprises one or more exchangeable or displaceable groups, atoms, and/or ligands. Suitably, the gel stabilising agent comprises one or more displaceable/exchangeable leaving groups. Suitably, the gel stabilising agent comprises two or more displaceable/exchangeable leaving groups, suitably three or more, most suitably four leaving groups. Suitably any counterions, displaceable groups, atoms, and/or ligands associated with or bonded to (be it through covalent, ionic, or other electrostatic bonding) the multivalent central atom are selected to furnish a gel stabilising agent that is soluble in water and suitably soluble in the gelling composition (prior to any drying/curing).

In a particular embodiment, the multivalent central atom is tin (IV) (i.e. Sn⁴⁺).

### Metal-based Gel Stabilising Agent

The multivalent central atom is a multivalent central tin (Sn) atom. As such, the gel stabilising agent may be or comprise one or more metal-based compound(s).

In a particular embodiment, the central tin (Sn) atom is tin (IV) (i.e. Sn⁴⁺).

The metal-based compound(s) are suitably free of (or suitably free of compounds comprising) any addition polymerisable groups, e.g. such as organic groups capable of taking part in addition polymerisation (e.g. vinyl, alkene, alkyne, acrylate, etc.). As such, the gel stabilising agent may comprise one or more condensation polymerisable monomers but suitably no addition polymerisable monomers.

Suitably, where the gel stabilising agent comprises a metal as the multivalent central atom, the gelling composition comprises 0.01-1.5% w/w gel stabilising agent, suitably 0.04-1.0% w/w, more suitably 0.05-0.5% w/w, most suitably 0.08-0.25% w/w. In a particular embodiment, where the gel stabilising agent comprises a metal as the multivalent central atom, the gelling composition comprises 0.025-2.0% w/w gel stabilising agent.

Suitably said central metal atom (or where the gel stabilising agent comprises multiple compounds, suitably at least one of the central metal atoms, suitably all of the central metal atoms) has a valency (or oxidation state) of at least 2 (or +2), suitably at least 3 (or +3), suitably at most 4 (or +4). Suitably said central metal atom(s) (suitably at least one, suitably all) has a valency (or oxidation state) of 2 (or +2) or 4 (or +4). In a particular embodiment, the central metal atom(s) has a valency of 4 (i.e. +4).

Suitably, where the gel stabilising agent comprises a metal as the multivalent central atom, the gel stabilising agent comprises one or more exchangeable or displaceable groups (e.g. atoms, counterions, and/or ligands). Suitably, the gel stabilising agent comprises one or more displaceable/exchangeable leaving groups. Suitably, the gel stabilising agent comprises two or more displaceable/exchangeable leaving groups, suitably three or more, most suitably four leaving groups. Suitable counterions for the central metal atom, which may suitably serve as leaving groups, include halide (e.g. chloride, bromide, iodide), hydroxide, alkoxide, acetate, oxalate, acetylacetonate, alkanoate (e.g. laurate, octoate), sulphate, nitrate, lactate, carbonate. Suitably ligands for the central metal atom, which may suitably serve as leaving groups, include water, ammonia, an alcohol. In a particular embodiment, the one or more exchangeable or displaceable groups comprise or consist of halide and/or alkoxide.

Suitably the multivalent central atom of the gel stabilising agent is capable of co-ordinating with (or forming dative bonds with) one or more groups (e.g. heteroatoms) of the hydrogel polymer network.

In a particular embodiment, the gel stabilising agent is or comprises one or more compounds comprising a central metal atom (or central metal cation) (M) having an oxidation state between +2 and +4, one or more counterions (or peripheral anions) (R"), and optionally one or more ligands (L). In some embodiments, the compound(s) may comprise an additional cation in addition to the central metal cation, but preferably the central metal cation is the only cation of the compound(s).

The central metal atom/cation (M) is tin.

Suitably, at least one of the counterions (R") is a leaving group or group hydrolysable to yield an OH group; and suitably the other(s) of the counterions (R") are either a leaving group or group hydrolysable to yield an OH group, or a non-leaving group or non-hydrolysable group.

In a particular embodiment, all of the counterions are leaving groups or groups hydrolysable to yield an OH group (though not necessarily the same groups). Suitably, all the counterions (R") are the same.

The counterions are suitably selected from one or more of halide (e.g. chloride, bromide, iodide), oxide, hydroxide, alkoxide, acetate, oxalate, acetylacetonate, alkanoate (e.g. laurate, octoate), sulphate, nitrate, lactate, carbonate.

In a particular embodiment, the central metal atom/cation (M) is tin; and the counterion(s) are selected from one or more of chloride, bromide, iodide, oxide, hydroxide, alkoxide, acetate, oxalate, acetylacetonate, alkanoate (e.g. laurate, octoate), sulphate, nitrate, lactate, carbonate. In a particular embodiment, the central metal atom/cation (M) is tin; and the counterion(s) are selected from one or more of chloride, bromide, iodide, and alkoxide. In a particular embodment, the gel stabilising agent is or comprises a metal halide, suitably a metal chloride, suitably a tin halide (most suitably a tin(IV) halide), most suitably tin chloride (most suitably tin(IV) chloride).

Where the one or more compounds of the gel stabilising agent comprise one or more ligands, said ligands are suitably selected from water, ammonia, or an alcohol (most preferably water). Suitably all the ligands are the same.

In a particular embodiment, the gel stabilising agent is or comprises one or more compounds selected from a tin(IV) compound. In a particular embodiment, the gel stabilising agent is or comprises one or more compounds selected from SnCl₂, SnBr₂, SnCl₄, SnBr₄, Sn(II)Octoate, Sn(IV)Isopropoxide, Sn(IV)Ter-Butoxide, Sn(ll) acetate, Sn(II)Oxalate, Sn(IV)Oxalate, Sn(II)acetylacetonate, Dibutyltin bis(acetylacetonate), Dibutyltin dichloride, Dibutyltin dilaurate, Dibutyltin diacetate, Dibutyltin octoate, Tin(II)sulfate, Tin(IV)sulfate, Dimethyltin dichloride, Methyltin trichloride, or optionally a solvate (e.g. hydrate) or ligand complex thereof.

In a particular embodiment, the gel stabilising agent is or comprises SnCl₄ (suitably SnCl₄.5H₂O), or optionally a solvate (e.g. hydrate) or ligand complex thereof.

Herein, unless stated otherwise, any quantities (e.g. % w/w) given in relation to the gel stabilising agent includes total quantities of solvated compounds where they are provided in such solvated form. However, where "effective non-solvated weights" or "effective non-solvated weight concentration/percentages (% w/w)" are stated, this refers to the effective non-solvated weight or weight % of the particular compound(s) in question, and encompasses where said compound(s) is/are provided in solvated form but in a quantity corresponding with (by converted it into) the stipulated effective non-solvated weight or weight concentration.

Suitably, where the gel stabilising agent comprises a metal as the multivalent central atom, the gelling composition comprises 0.1 to 5.0% w/w gel stabilising agent (effective non-solvated concentration), suitably 0.01-1.5% w/w gel stabilising agent (effective non-solvated concentration), suitably 0.04-1.0% w/w (effective non-solvated concentration), more suitably 0.05-0.5% w/w (effective non-solvated concentration), most suitably 0.08-0.25% w/w (effective non-solvated concentration).

### Aqueous vehicle

The aqueous vehicle acts as a carrier for the other ingredients of the gelling composition and enables the gelling composition to flow and thereby be poured or otherwise injected into the internal space of a glazing unit prior to curing.

Suitably the gelling composition comprises 30-90% w/w of the aqueous vehicle, more suitably 45-70% w/w, and most suitably 50-60% w/w.

The aqueous vehicle suitably comprises 75-100% w/w water. Any suitable form of water such as ion-exchanged water, distilled water, underground water, tap water and industrial water can be used.

In a preferred embodiment, the aqueous vehicle is 100% w/w water.

In certain embodiments, the aqueous vehicle may comprise a further solvent which is miscible with water. The miscible solvent may be selected from a lower alcohol (suitably a (1-4C)alcohol, such as methanol, ethanol, n-propanol, or i-propanol), a glycol, a ketone, an amide, a saccharide and a urea, and is useful for the prevention of freezing of the aqueous vehicle. For example, the aqueous vehicle may comprise up to 25% w/w of the miscible solvent.

When ingredients of the gelling composition or cured gelling composition are provided in the form of a solvate (e.g. hydrate), the quantity of solvate itself (e.g. water) contributed by the relevant ingredient(s) may be considered part of the aqueous vehicle in the final composition where the amount of said ingredient is calculated by reference to its effective non-solvated concentration or weight. As such, the aqueous vehicle may comprise one or more solvates contributed by any of the other ingredients within the composition(s).

The total % w/w amounts of all the ingredients within the compositions of the invention total 100 % w/w. Herein, where the % w/w amounts of all the stipulated ingredients total amount less than 100 % w/w, the balance of the composition(s) may comprise the aqueous vehicle or water.

### The pH of the composition

The gelling composition has an acidic pH wherein the pH is greater than or equal to pH 3. Maintaining this pH is important for forming cured hydrogels with the required physical and fire resistant properties in particular providing a suitable vehicle for particular (fire retardant) salt additives and maintaining clarity.

Suitably, the pH of the gelling composition is between 3 and 7, suitably between 3.5 and 6, more suitably between 4 and 5.5, most suitably between 4.5 and 5.5. The pH is suitably less than or equal to 6.95, suitably less than or equal to 6.9, suitably less than or equal to 6.8, suitably less than or equal to 6.5. The pH of the gelling composition is suitably between 4.65 and 5.25, suitably between 5.0 and 5.5, suitably between 5.1 and 5.25, suitably between 4.7 and 5.3. The pH of the gelling composition may be measured using methods well known in the art, suitably by simply submerging a calibrated pH probe directly into the gelling composition.

The pH of the gelling composition may be suitably controlled by adjusting the balance of the acidic and basic ingredients present in the gelling composition. For instance, a buffer system may be generated by mixing appropriate acidic and basic components. Any suitable buffer may be used in conjunction with the gelling compositions of the present invention, although a combination of acetic acid and/or acrylic acid and salts formed from their acid-base reaction with magnesium oxide has been shown to be particularly viable.

In certain embodiments, the hydrogel-forming component may provide some or all of the acidic components (e.g. acidic monomers and/or polymers) that contribute to the buffering of the gelling composition.

In general, if the pH is too low or too high, the gelling composition and/or hydrogel formed therefrom lacks sufficient transparency to be useful in glazing units. Moreover, pH can have a significant effect on the fire-resistance of the resulting cured gels, and may also affect the service lifetime of such gels.

### Cross-linking agents

In some embodiments, the gelling composition further comprises a cross-linking agent. The cross-linking agent suitably facilitates the cross-linking between polymer chains (and/or internal cross-linking within polymers) during curing of the gelling composition, whether the polymers are pre-formed or formed during curing from polymerisable monomers comprised of the hydrogel-forming component. The cross-linking agent suitably participates in the covalent linking of distinct polymer chains and/or distinct portions of an individual polymer chains. Suitably the cross-linking agent is or comprises one or more addition polymerisable monomers, or suitably at least is or comprises monomers with addition polymerisable group(s).

In some embodiments the cross linking agent partakes in covalent bonding cross-linking through incorporation into more than one polymer chain.

The aforementioned cross-linking agent suitably constitutes 0.001 to 0.2% w/w of the gelling composition, more suitably 0.005 to 0.1% w/w of the gelling composition. In an embodiment, the gelling composition comprises 0.01 to 0.08% w/w cross-linking agent, suitably 0.03-0.06% w/w, more suitably 0.035-0.055% w/w.

It is possible to improve the service lifetime of the cured hydrogels of the invention by selecting the correct quantity of cross-linking agent within the corresponding gelling compositions. Judicious selection of the quantity of cross-linking agent can also improve fire-resistance properties of said hydrogels.

In a particular embodiment, the cross-linking agent is a cross-linking monomer having two or more unsaturated bonds in the molecule, and monomers such as N-alkoxymethyl(meth)acrylamide derivatives which, after being subjected to polymerization, can form a cross-linked structure by a post-treatment such as heating. Examples of the crosslinkable monomers belonging to the former group are N.N'-methylenebisacrylamide, N,N-diallylacrylamide, triacrylformal, N,N-diacryloylimide, N,N-dimethacryloylimide, ethylene glycol acrylate, ethylene glycol dimethacrylate, polyethylene glycol diacrylates, polyethylene glycol dimethacrylates, propylene glycol diacrylate, propylene glycol dimethacrylate, polypropylene glycol diacrylates, polypropylene glycol dimethacrylates, 1,3-butylene glycol diacrylate, 1,3-butylene glycol dimethacrylate, 1,4-butylene glycol dimethacrylate, glycerol dimethacrylate, neopentyl glycol dimethacrylate, trimethlyolpropane triacrylate, trimethylolpropane trimethacrylate, trimethylolethane trimethacrylate, trimethylolethane triacrylate, tetramethylolmethane tetramethacrylate, tetramethylolmethane triacrylate, divinylbenzene, diallyl phthalate, urethane (meth)acrylate, polyester (meth)acrylate and epoxy acrylate. Examples of the N-alkoxymethyl(meth)acrylamide derivatives belonging to the latter group are N-methylol(meth)acrylamide, N-methoxymethyl(meth)acrylamide and N-tertbutoxymethyl(meth)acrylamide and include even N-hydroxymethyl(meth)acrylamide.

In a particular embodiment, the cross-linking agent comprises N,N-methylenebisacrylamide (MBA). In an embodiment, the gelling composition comprises 0.01 to 0.08% w/w MBA, suitably 0.03-0.06% w/w, more suitably 0.035-0.055% w/w.

In some embodiments, the gelling composition is free of covalent bonding cross-linking agents. Upon curing, such gelling compositions form polyelectrolyte hydrogels in which di- or tri-valent metal ions form cross-links by co-ordinating with functional groups present in the polymer chains forming the hydrogel matrix. In particular, acidic moieties (or salts/conjugate bases thereof) within the polymer(s), such as carboxylic acid groups, can serve as suitable functional groups for cross-linking with metals. Such electrostatic cross-linking may also occur in addition to any covalent cross-linking formed *via* a cross-linking agent. In a particular embodiment, Mg²⁺ cations provide ionic cross-linking.

In some embodiments, gelling compositions are cross-linking by a combination of both covalent bonding cross-linking and the use of divalent or trivalent metal ions to form ionic or coordinative cross-links. In a particular embodiment, N,N-methylenebisacrylamide provides covalent cross-linking whilst Mg²⁺ cations provide ionic cross-linking.

### Initiators

In particular embodiments, the gelling composition further comprises an initiator.

In some embodiments, the gelling composition further comprises a photoinitiator.

The photoinitiator may suitably facilitate polymerisation upon curing, for instance on exposure to ultraviolet (UV) radiation. Suitable photoinitiators are well known in the art, and the skilled person could readily select any suitable photoinitiator on the basis of water solubility and wavelength of activation. However, photoinitiators from the Irgacure™ range (commercially available from BASF) have been found to be a particularly effective photoinitiators for use with the present invention, especially Irgacure™ 184 which minimises undesirable "yellowing" and is suitable for curing in the presence of some dissolved air. In an alternative embodiment, the photoinitiator may be 2-hydroxy-2-methyl-1-phenylpropane-1-one (IR-1173).

In another embodiment, the gelling composition comprises a thermoinitiator. Suitable thermoinitiators should have some solubility in the gelling composition these may include but no be limited to potassium persulfate, potassium persulfate and sodium thiosulfate, 4,4-Azobis(4-cyanovaleric acid), 2,2'-Azobis[2-(2-imidazolin-2-yl)propane]dihydrochloride, 2,2'-Azobis[2-(2-imidazolin-2-yl)propane]disulfate dehydrate, 2,2'-Azobis(2-methylpropionamidine)dihydrochloride, 2,2'-Azobis[N-(2-carboxyethyl)-2-methylpropionamidine]hydrate, 2,2'-Azobis{2-[1-(2-hydroxyethyl)-2-imidazolin-2-yl]propane}dihydrochloride, 2,2'-Azobis[2-(2-imidazolin-2-yl)propane], 2,2'-Azobis(1-imino-1-pyrrolidino-2-ethylpropane)dihydrochloride, 2,2'-Azobis{2-methyl-N-[1,1-bis(hydroxymethyl)-2-hydroxyethl]propionamide}, 2,2'-Azobis[2-methyl-N-(2-hydroxyethyl)propionamide]. Selection of initiator is not only based on solubility but also on half life at a particular polymerisation temperature and at a particular pH.

Where an initiator (especially a photoinitiator) is present within the gelling composition, it suitably comprises 0.001-0.05% w/w of the total gelling composition, more suitably 0.005-0.020% w/w.

### Defoamer

In some embodiments, the gelling composition further comprises a defoamer (or air release agent). The presence of a defoamer may facilitate degassing of the gelling composition, for instance, prior to curing.

A multitude of defoamers may be employed, and may be dispersed in an aqueous vehicle for inclusion within the compositions of the invention. Suitable defoamers include various types of oils and long chain fatty alcohols, fatty acid soaps or esters, silicone glycols, polyethylene glycol and polypropylene glycol copolymers. Specific examples include, but are not limited to, polydimethyl siloxanes, 2,4,7,9-tetramethyl-5-decyn-4--7-diol, 2-ethylhexyl alcohol, n-beta-aminoethyl-gamma-aminopropyl-trimethoxysilane, Airase®5600, Airase®5700, EnviroGem®AD01, Surfynol®MD-20 and Surfynol®420. Such agents may be advantageously used within the gelling composition in an amount from 0.0001 - 0.5 % w/w, suitably from 0.01 - 0,2 % w/w.

In a particular embodiment, the defoamer is Airase®5600, and is suitably included within a gelling composition in an amount between 0.0001 and 0.15 % w/w.

### Coupling agent

In some embodiments, the gelling composition additionally comprises a coupling agent to facilitate bonding of the gelling composition, especially the cured gelling composition, to the surface of the transparent panes of the glazing unit. Most suitably, the gelling composition is free of a coupling agent as defined herein.

In some embodiments, the coupling agent is pre-coated onto the contact surface of the transparent panes of the glazing unit prior to the manufacture of the unit, for example, by spray coating prior to the *in situ* curing of the gelling composition.

In other embodiments the coupling agent is pre-coated onto the contact surface of the transparent panes of the glazing unit after manufacturer of the unit by swilling the coupling agent around within the internal space and subsequently draining out the excess. The advantage of this method is that the spacers are also coated with primer prior to the *in situ* curing of the gelling composition. However, in some cases it can be expedient to incorporate the coupling agent into the gelling composition itself in order to avoid the need to pre-coat the transparent panes with the coupling agent (see below).

Suitably, the coupling agent is a polymerisable coupling agent which may itself partake in coupling reactions during curing. Suitably the coupling agent comprises one or more addition polymerisable groups, e.g. such as organic groups capable of taking part in addition polymerisation (e.g. vinyl, alkene, alkyne, acrylate, etc.).

For bonding the gel to a glass surface, the coupling agent suitably comprises a silane moiety. Suitably, the coupling agent comprises a silane coupled to a vinyl group. The vinyl group enables the coupling agent to polymerise with vinyl containing monomers or polymers that form the hydrogel forming component and the pendant silane groups bond the resultant hydrogel to the surface of the glass panes.

Non-limiting examples of suitable silanes include vinyltrichorosilane, vinyltrimethoxysilane, vinyltriethoxysilane, vinyltri(2-methoxyethoxy)silane, vinyltriisopropyl silane, vinyltris(tert-butylperoxy)silane, vinyldimethylchlorosilane, vinyldimethoxysilane, vinyldichlorosilane, vinylmethyldimethoxysilane, vinyldiethoxysilane, methacryloxymethyl)methyldimethoxysilane, methacryloxymethyltrimethoxysilane, 3-methacryloxypropyltriacetoxysilane, 3-methacryloxypropyltrimethoxysilane, and vinyltriacetoxysilane.

Particularly suitable silanes include vinyltriethoxysilane, vinyltrimethoxysilane, 3-acryloxypropyltrimethoxysilane and 3-methacryloxypropyltrimethoxysilane. In a particular embodiment, the coupling agent is 3-acryloxypropyltrimethoxysilane. Alternatively organic titanates or organic zirconates may be used similarly as described in US4264681.

Where a coupling agent is present within the gelling composition, it suitably comprises 0.01-2 % w/w of the total gelling composition.

### Specific Embodiments

Particular embodiments of the gelling composition of the invention include, for example, the embodiments described below, wherein each of the defined features or ingredients may have any of the meanings (or limitations) defined hereinbefore or in any paragraph hereinafter. The following particular embodiments of gelling compositions and any features thereof are limited by the definitions of gelling compositions set forth herein and in appended claim 12.

In a particular embodiment, the gelling composition of the invention comprises or is obtained by mixing together (suitably substantially homogenously):
a curable hydrogel-forming component;
one or more metal(I) and/or metal(II) salts;
a gel stabilising agent; and
an aqueous vehicle;
wherein the gel stabilising agent is (or comprises) a compound having a multivalent central atom with an atomic number greater than or equal to 13 and a valency of greater than or equal to 3, the compound is free of addition polymerisable groups (e.g. vinyl), and the gel stabilising agent constitutes between 0.05 and 1.5% w/w of the total gelling composition;
wherein the composition has an acidic pH wherein the pH is greater than or equal to pH 3.

In a particular embodiment, the gelling composition of the invention comprises or is obtained by mixing together (suitably substantially homogenously):
5-40% w/w of a curable hydrogel-forming component;
15-60% w/w of one or more metal(I) and/or metal(II) salts;
0.05 and 1.5% w/w of a gel stabilising agent;
0.001 to 0.2% w/w of a cross-linking agent;
0.001-0.05% w/w of an initiator; and
40-90% w/w of an aqueous vehicle;
wherein the gel stabilising agent is (or comprises) a compound having a multivalent central atom with an atomic number greater than or equal to 13;
wherein the composition has a pH between 4 and 5.5.

In a particular embodiment, the gelling composition of the invention comprises or is obtained by mixing together (suitably substantially homogenously):
5-40% w/w of a curable hydrogel-forming component;
an effective non-solvated weight concentration of 10-50% w/w of one or more metal(I) and/or metal(II) salts;
an effective non-solvated weight concentration of 0.05 and 1.5% w/w of a gel stabilising agent;
40-90% w/w of an aqueous vehicle;
wherein the gel stabilising agent is (or comprises) a compound having a multivalent central atom with an atomic number greater than or equal to 13;
wherein the composition has an acidic pH wherein the pH is greater than or equal to pH 3.

In a particular embodiment, the gelling composition of the invention comprises or is obtained by mixing together (suitably substantially homogenously):
5-40% w/w of a curable hydrogel-forming component;
an effective non-solvated weight concentration of 10-50% w/w of one or more metal(I) and/or metal(II) salts;
an effective non-solvated weight concentration of 0.05 and 1.5% w/w of a gel stabilising agent;
0.001 to 0.2% w/w of a cross-linking agent;
0.001-0.05% w/w of an initiator; and
40-90% w/w of an aqueous vehicle;
wherein the gel stabilising agent is (or comprises) a compound having a multivalent central atom with an atomic number greater than or equal to 13;
wherein the composition has a pH between 4 and 5.5.

In a particular embodiment, the gelling composition of the invention comprises or is obtained by mixing together (suitably substantially homogenously):
6-14% w/w of a curable hydrogel-forming component comprising an acidic polymerisable monomer;
an effective non-solvated weight concentration of 15 to 30% w/w of one or more metal(I) and/or metal(II) salts;
an effective non-solvated weight concentration of 0.05 and 1.5% w/w of a gel stabilising agent; and
40-90% w/w of an aqueous vehicle;
wherein the gel stabilising agent is (or comprises) a compound having a multivalent central atom selected from silicon (Si), aluminium (Al), titanium (Ti), zirconium (Zr), or tin (Sn);
wherein the composition has an acidic pH wherein the pH is greater than or equal to pH 3.

In a particular embodiment, the gelling composition of the invention comprises or is obtained by mixing together (suitably substantially homogenously):
6-14% w/w of a curable hydrogel-forming component comprising an acidic polymerisable monomer;
an effective non-solvated weight concentration of 15 to 30% w/w of one or more metal(I) and/or metal(II) salts;
an effective non-solvated weight concentration of 0.05 and 1.5% w/w of a gel stabilising agent;
0.001 to 0.2% w/w of a cross-linking agent;
0.001-0.05% w/w of an initiator; and
40-90% w/w of an aqueous vehicle;
wherein the gel stabilising agent is (or comprises) a compound having a multivalent central atom selected from silicon (Si), aluminium (Al), titanium (Ti), zirconium (Zr), or tin (Sn);
wherein the composition has a pH between 4 and 5.5.

In a particular embodiment, the gelling composition comprises or is obtained by mixing together:
a curable hydrogel-forming component comprising an acidic polymerisable monomer;
one or more metal(I) and/or metal(II) salts;
a gel stabilising agent; and
an aqueous vehicle;
wherein the gel stabilising agent is (or comprises) a compound having a multivalent central atom that is a group 14 element with a valency of 4 and an atomic number greater than or equal to 13;
wherein the composition has an acidic pH wherein the pH is greater than or equal to pH 3 and less than or equal to 6.9.

In a particular embodiment, the gelling composition of the invention comprises or is obtained by mixing together (suitably substantially homogenously):
a curable hydrogel-forming component;
one or more metal(I) and/or metal(II) salts;
a gel stabilising agent; and
an aqueous vehicle;
wherein the gel stabilising agent is (or comprises) a tin(IV) compound (suitably a tin(IV) compound with exchangeable/displaceable groups, ligands, or counterions), and the gel stabilising agent constitutes between 0.01 and 1.5% w/w of the total gelling composition; wherein the composition has an acidic pH wherein the pH is greater than or equal to pH 3.

In a particular embodiment, the gelling composition of the invention comprises or is obtained by mixing together (suitably substantially homogenously):
a curable hydrogel-forming component comprising an acidic polymerisable monomer;
one or more metal(I) and/or metal(II) salts;
a gel stabilising agent; and
an aqueous vehicle;
wherein the gel stabilising agent is (or comprises) a tin(IV) compound (suitably a tin(IV) compound with exchangeable/displaceable groups, ligands, or counterions), and the gel stabilising agent constitutes between 0.025 and 1.5% w/w of the total gelling composition; wherein the composition has a pH between pH 4 and pH 6 (most suitably a pH between pH 4.6 and pH 5.4, more suitably a pH between pH 4.7 and pH 5.3)).

In a particular embodiment, the gelling composition of the invention comprises or is obtained by mixing together (suitably substantially homogenously):
6-14% w/w of a curable hydrogel-forming component comprising an acidic polymerisable monomer;
an effective non-solvated weight concentration of 15 to 30% w/w of one or more metal(I) and/or metal(II) salts;
a a gel stabilising agent;
40-90% w/w of an aqueous vehicle;
wherein the gel stabilising agent is (or comprises) a tin(IV) compound (suitably a tin(IV) compound with exchangeable/displaceable groups, ligands, or counterions, suitably a tin(IV) halide), and the gel stabilising agent constitutes between 0.025 and 1.5% w/w of the total gelling composition; wherein the composition has a pH between pH 4 and pH 6 (most suitably a pH between pH 4.6 and pH 5.4, more suitably a pH between pH 4.7 and pH 5.3)).

In a particular embodiment, the gelling composition of the invention comprises or is obtained by mixing together (suitably substantially homogenously):
6-14% w/w of acrylic acid;
an effective non-solvated weight concentration of 15 to 30% w/w of one or more metal(I) and/or metal(II) salts comprising an Mg²⁺ cation and one or more anions selected from sulphate, acetate and oxide;
a gel stabilising agent;
40-90% w/w of an aqueous vehicle;
wherein the gel stabilising agent is (or comprises) a tin(IV) compound (suitably a tin(IV) compound with exchangeable/displaceable groups, ligands, or counterions, suitably a tin(IV) halide), and the gel stabilising agent constitutes between 0.025 and 1.5% w/w of the total gelling composition; wherein the composition has a pH between pH 4 and pH 6 (most suitably a pH between pH 4.6 and pH 5.4, more suitably a pH between pH 4.7 and pH 5.3)).

### Manufacture of the Gelling Composition

The present invention provides a method of preparing a gelling composition (preferably suitable for forming a fire-resistant hydrogel interlayer within a glazing unit), as set forth herein an in appended claim 13, the method comprising mixing together (suitably substantially homogenously) the ingredients described herein for inclusion within the gelling composition.

Suitably, the relevant ingredients are mixed such that (substantially) all ingredients are dissolved within the aqueous vehicle, suitably to provide the gelling composition as a clear solution. The gelling composition may be optionally filtered to remove any excess solids to furnish the gelling composition as a clear solution. The gelling composition may be suitably stored at standard ambient temperature and pressure.

Optionally, the curable hydrogel-forming component may be pre-mixed with the gel stabilising agent, and suitably together dissolved within an (or a portion of the) aqueous vehicle, before other ingredients are mixed therewith.

The present invention also provides a gelling composition obtainable by, obtained by, or directly obtained by a method of preparing a gelling compositions as defined herein.

### The glazing unit and processes for its manufacture

The present invention further provides a glazing unit, as set forth herein and in appended claim 1, comprising a first transparent pane and a second transparent pane with an interlayer disposed therebetween, wherein the interlayer is a hydrogel formed by curing a gelling composition as defined herein.

The glazing until is suitably sealed about the perimeter edge by a sealing means to retain the gel layer in place.

The first and second panes may be formed from any suitable transparent material, such as glass or transparent plastic.

The transparent panes are spaced apart from one another such that the respective internal surfaces of the transparent panes face one another, suitably in a substantially parallel manner.

The present invention provides a process for forming a glazing unit as defined herein and in appended claim 14, the process comprising:
i) providing a first and a second transparent pane;
ii) partially assembling the glazing unit such that the first and second transparent panes are spaced apart form one another and a sealing means holds the first and second panes in position; wherein:
   the sealing means comprises an opening; and
   the first and second panes and the sealing means together define an internal space;
iii) delivering a gelling composition as defined herein into the internal space through the opening in the sealing means;
iv) closing the opening in the sealing means to provide a sealed internal space; and
v) curing the gelling composition to provide a hydrogel gel interlayer within the internal space;
wherein the gel is bonded to the inner surfaces of the first and/or second transparent panes either inherently or by either coating at least one of the internal surfaces of the first and/or second panes with a coupling agent prior to step (iii) or incorporating the coupling agent into the gelling composition..

Some or all of steps i) to v) may be carried out simultaneously or sequentially in any suitable order. The skilled person will readily recognise how the sequence of steps can be adapted in different manufacturing methods without departing from the scope of the invention. For instance, steps iv) and v) may be carried out in either order and, in fact, performing step v) first may afford advantages where curing leads to an expansion in volume of the gelling composition.

Moreover, in processes where at least one of the internal surfaces of the transparent panes is coated with a coupling agent prior to step (iii) of the process, the precise stage at which at least one of the internal surfaces is coated with a coupling agent may be at any point prior to step (iii). For instance, the internal surfaces of the first and second panes provided in step (i) may have been pre-coated with the coupling agent, or alternatively the relevant internal surfaces may be coated after the partial assembly in step (ii).

Furthermore, as indicated above, in certain embodiments, the coupling agent may even be a constituent of the gelling composition itself such that coating with the coupling agent proceeds simultaneously with step iii). However, preferably the gelling composition is free of the coupling agent (or any coupling agents defined herein) and the internal surfaces are pre-coated.

In a particular embodiment, steps i)-v) are performed in the sequential order as listed above.

The present invention further provides a glazing unit, wherein the glazing unit is obtainable by, obtained by, or directly obtained by the process as defined herein.

### Transparent panes

As previously indicated, the first and second panes may be formed from any suitable transparent material, such as glass or transparent plastic/polymer sheets.

In an embodiment, the transparent panes are glass panes.

In a particular embodiment, the glass is selected from borosilicate glass, annealed float glass, toughened glass, heat strengthened glass, hard coated glass, soft coated glass, laminated glass or combinations thereof.

In an alternative embodiment, the transparent panes are polycarbonate sheets.

In an alternative embodiment, the transparent panes are composed of a UV transmissive laminated glass.

In an alternative embodiment, the transparent panes are composed of a UV protective laminated glass

In an alternative embodiment, the transparent panes are composed of a combination of UV protective laminated glass and UV transmissive glass.

In a particular embodiment, the glass is toughened glass.

Suitably the transparent panes have a thickness between 2mm and 15mm.

The transparent panes used in accordance with the invention may be any suitable shape, for instance, square, rectangular, triangular, circular, etc. The transparent panes may be dimensioned to suit the particular application.

In some embodiments, more than two transparent panes may be present in the glazing unit. For instance, first, second, and third transparent panes may be present to produce a "triple-glazing" unit. Suitably, such glazing units are "partially assembled", as per step ii) above, such that the third transparent pane is also secured at its respective edges to the perimeter seal associated with the first and second panes, so as to be spaced apart in an opposed manner from the second pane and define an additional internal space therebetween. This additional internal space may optionally be open, by virtue of an opening in the perimeter seal, so that a cured gelling composition can also be provided within this additional internal space in the same manner as described in relation to the original internal space between the first and second panes (i.e. by following steps ii)-v) in relation to the third pane and optionally coating any additional internal surfaces with a coupling agent as defined herein). Further transparent panes may be arranged likewise, and likewise may optionally comprise a cured gelling composition within any or all of the additional internal spaces they create by implementing steps ii)-v) in relation to the third and any subsequent panes, and preferably coating any additional internal surfaces with a coupling agent as defined herein. Alternatively, one or more of any additional internal space(s) formed by one or more additional transparent panes in the glazing unit may be free of the cured gelling composition of the present invention (i.e. they are left empty, evacuated, or filled with an alternative substance (e.g. gas or alternative gel).

Thus, the glazing unit may comprise one or more further transparent panes optionally with further interlayer(s) in between neighbouring (i.e. directly opposing) transparent panes, wherein said interlayer(s) preferably comprise the hydrogel formed by curing the gelling composition as defined herein. Any further transparent panes may suitably be spaced from neighbouring (i.e. directly opposing) transparent panes by between 1 and 100mm, preferably by a sealing means comprising a spacer (wherein the spacer is suitably as herein defined).

### The partial assembly of the glazing unit

The partial assembly of the glazing unit in step (ii) of the process involves assembling the glazing unit such that the first and second transparent panes are spaced apart from one another and a sealing means holds and seals the first and second panes together. The sealing means comprises an opening and the first and second panes and the sealing means together define an internal space which can be accessed through the opening in the sealing means.

As discussed above, there will be two internal spaces in a triple glazed unit where a third transparent pane is present.

Suitably the sealing means takes the form of a perimeter seal that extends around the edges of the transparent panes to hold them together.

The opening in the sealing means permits the remaining manufacturing steps to be conveniently performed on the partially assembled glazing unit before appropriate sealing takes place to close and completely seal the internal space.

Examples of a glazing unit assembly processes can be found in WO03/061963 A1 (FLAMRO), WO 2009/071409 (FLAMRO), US 4164108 A (SAINT GOBAIN), and US 4264681 A (SAINT GOBAIN).

The partial assembly process may optionally involve producing the opening(s) within the sealing means. The opening(s) may be produced at any point during the partial assembly process, for instance after the assembly process is complete or before the assembly process begins.

### Sealing means

The first and second transparent panes may be suitably spaced apart by a sealing means. The sealing means may suitably comprise a spacer.

The sealing means may be formed from any suitable material. The person skilled in the art will be able to select appropriate materials, adhesives (for securing the peripheral seal to the respective panes of glass), and configurations of the sealing means. Indeed these features may be appropriately selected based on the type of transparent pane, the spacing therebetween, and the shape of the glass.

In an embodiment, the sealing means is a perimeter seal.

The perimeter seal may be a single continuous perimeter seal. Alternatively, the perimeter seal may comprise a plurality of individual perimeter members, suitably connected together to produce the overall perimeter seal. Suitably, some or all of such individual perimeter members are sealingly connected. Suitably, some or all of such individual perimeter members are sealing connected to the relevant transparent panes.

In an embodiment, the transparent panes are rectangular and the perimeter seal comprises a base perimeter member, two side perimeter members, and a top perimeter member. One of said perimeter members may be absent to provide the opening to the internal space or, alternatively, one or more of said perimeter members may comprise one or more openings therein.

Suitably, the perimeter seal comprises a spacer. In a particular embodiment, the perimeter seal comprises a plurality of perimeter members, at least one of which is a spacer. The spacer itself is suitably connected, preferably sealingly connected, to one or more other perimeter members. In a particular embodiment, the perimeter seal comprises two spacers. In an embodiment, the perimeter seal comprises a single continuous spacer which extends around the perimeter, optionally having therein a sealable opening.

Suitably the final glazing unit comprises the peripheral seal. However, in an embodiment, the peripheral seal (or part thereof) is removed once the gelling composition has been self-sealed upon curing. In such an embodiment, the peripheral seal (or part thereof) serves as a temporary containment means for the gelling composition and/or the coupling agent during the manufacture of the glazing unit. As such, the glazing unit may be free of a peripheral seal or alternatively comprise a peripheral seal around only part of the periphery of the glazing unit.

The opening in the sealing means facilitates the ingress and egress of fluids into and from the internal space. For instance, the opening provides a means through which a coupling agent can be introduced into the internal space to pre-coat the internal surfaces of the transparent panes, and also provides a means to drain excess coupling agent solution from the internal space. Likewise, the opening provides an entrance port to the internal space for the delivery of the gelling composition of the invention.

In a particular embodiment, the sealing means comprises one or more openings. Additional openings can facilitate venting during the delivery of the gelling composition through the opening(s). In an embodiment, the spacer(s) comprises one or more openings.

An opening may be produced in the peripheral seal before, during, or after partial assembly of the glazing unit.

Suitably, the spacing between the first and second pane of glass (i.e. the width of the internal space) is between 1 mm and 100mm (as measured between the opposing internal surfaces). The thickness of the gel determines the duration of the fire resistance. In general, the gelling compositions of the present invention allow for smaller spacing between the glass panes than typical prior art glazing units for a required duration of fire resistance. However, thicker spacing allows for thicker hydrogel interlayers which, in general, provides for improved fire-resistance.

In some embodiments, the first and second transparent panes (and indeed the third and subsequent panes, where relevant) of the glazing unit are separated by a spacer located at the edges of the internal space defined by the opposing transparent panes. Suitably, the spacer abuts or forms a part of the peripheral seal. Suitably the spacer abuts the opposing panes of glass to maintaining spacing therebetween (optionally *via* one or more intervening sealing members). Preferably the spacer extends from the peripheral seal (with which it abuts or forms a part thereof) into or towards a portion of the internal space.

In a particular embodiment, the glazing unit comprises two or more of the above described spacers. Any or all of the spacer(s) may be form part of the peripheral seal.

The spacer(s) is suitably non-porous. The spacer(s) is suitably solid (i.e. as opposed to hollow). The spacer(s) suitably comprises solid metal or plastics material. The spacer(s) is suitably free of desiccants. The spacer(s) is suitably free of perforation.

At least one spacer suitably comprises one or more sealable openings (optionally corresponding with the "opening in the perimeter seal" described herein), suitably of about 3mm diameter. The sealable opening(s) may be produced before, during, or after the partial assembly process.

The internal space is a transparent region of the glazing unit located between the opposing transparent panes, and is suitably enclosed either partially (prior to sealing step iv)) or fully (after sealing step iv)) by the sealing means. Multiple internal spaces may be present where three or more panes of glass comprise the glazing unit (e.g. in triple-glazed units).

The internal space and components in contact therewith are suitably free of desiccants to prevent adverse interaction with the hydrogel.

### Delivery of the gelling composition into the internal space

The gelling composition of the invention is sufficiently fluid to allow delivery thereof to the internal space of the partially assembled glazing unit *via* the one or more openings in the sealing means. The gelling composition suitably has a viscosity which is sufficiently low to permit bubbles to float to the top surface of the gelling composition to allow said bubbles to be removed or vented. The viscosity of the gelling composition is therefore appreciably low preferably between 8.94×10⁻⁴ Pa.s (at 20 °C) (i.e. that of water) and 0.065 Pa.s (at 20 °C) (e.g. that of a low-viscosity oil).

In an embodiment, the gelling composition is poured into the internal space *via* the one or more openings. In another embodiment, the gelling composition is pumped or injected, optionally under high pressure, into the internal space *via* the one or more openings. Suitably the gelling composition is delivered through one opening whilst an additional opening serves as a vent.

The gelling composition is suitably delivered so as to completely fill the internal space (i.e. leaving no vacant space in the internal space).

Suitably, the gelling composition is delivered to the internal space as a "degassed" gelling composition. Degassing helps to ensure that no bubbles form within the cured gelling composition which could obscure visibility through the internal space of the glazing unit. Methods of degassing are well known in the art. In a particular embodiment, degassing of the gelling composition involves exposure of the gelling composition to a vacuum, optionally whilst being agitated or otherwise exposed to sonication.

In addition, prior to use in the manufacture of glazing units, the gelling compositions of the present invention are suitably filtered.

### Closing the opening in the sealing means

The opening in the sealing means may need to be closed after the gelling composition has been introduced to the internal space. Suitable processes for closing the opening to provide a sealed internal space are well known to the person skilled in the art, and any suitable process for sealing the opening may be used. The perimeter seal is suitably sealed with a sealant, for instance a silicone or polysulphide sealant.

In a particular embodiment, the opening in the sealing means is closed following delivery of the gelling composition to the internal space, and prior to curing of the gelling composition.

In an alternative embodiment, the perimeter seal is closed after the *in situ* curing of the gelling composition within the internal space.

### Curing of the gelling composition

Curing of the gelling composition to provide a hydrogel gel interlayer within the internal space of the glazing unit is suitably facilitated by the application thereto of heat and/or radiation. A person skilled in the art is able to recognise when the gelling composition has been suitably cured.

Suitably, curing of the gelling composition can be effected whilst the partially assembled glazing unit is located on an oscillating curing bed in order to ensure an even cure and superior optical quality.

In a particular embodiment, the gelling composition is cured through exposure to ultraviolet (UV) radiation, suitably UV radiation with a peak wavelength between 320 and 380 nm. The UV radiation is suitably of a wavelength appropriate to the initiator used.

Suitably, curing facilitates curing of the gelling composition as well as bonding of the cured gelling composition to the internal surface(s) of the transparent pane(s), suitably *via* a coupling agent which may be pre-coated upon said internal surface(s).

### The cured gelling composition

The cured gelling composition is hydrogel interlayer formed between the first and second transparent panes.

Upon curing of the gelling composition, the hydrogel-forming component forms a true hydrogel. As such, the cured gelling composition is suitably characterised as a hydrogel.

In an embodiment, the hydrogel comprises polymerisation adducts of monomeric units comprised of the initial hydrogel-forming component.

In an embodiment, the hydrogel comprises cross-linked adducts of polymeric units either present in the hydrogel-forming component or present following curing of the hydrogel-forming component (i.e. polymerisation adducts of monomeric units comprised of the initial hydrogel-forming component).

In a particular embodiment, the hydrogel comprises both the polymerisation adducts and cross-linked adducts as above described.

Cross-linking of or within polymeric units may suitably involve covalent cross-linking (i.e. *via* a cross-linking agent) and/or electrostatic cross-linking (i.e. where ions of metal salts co-ordinate with adjacent polymeric units or adjacent portions of an individual polymer unit). In a particular embodiment, both covalent and electrostatic cross-linking occurs.

Most suitably, cross-linking, whether covalent or ionic or both, occurs upon curing the gelling composition.

The presence of the gel stabilising agent within the gelling composition, and cured gelling composition, suitably increases the service lifetime of the cured gelling composition. It is thought that this increase in service lifetime is brought about by a cross-linking effect that is different to any cross-linking effects that may be imparted by the one or more salts (e.g. Mg²⁺ salts). Using the gel stabilising agent in the amounts mentioned herein is particularly advantageous in optimising the quality and service lifetime of a glazing interlayer.

### Coupling agent and the coating therewith of the internal surfaces of the transparent panes

The purpose of the coupling agent is to ultimately adhere the cured gelling composition to the internal surfaces of the panes within the internal space should the cured gelling composition possess ineffective inherent bonding capability.

Suitably, all internal surfaces (e.g. glass surfaces which face inwards towards the internal space) intended for contact with the cured gelling composition are coated with the coupling agent, optionally including any relevant internal surfaces of the third and subsequent panes of glass.

Suitably the surface(s) to be coated with the coupling agent (i.e. the "internal surface(s)") is pre-cleaned prior to coating with the coupling agent. In a particular embodiment, the surface(s) to be coated are pre-cleaned or pre-washed with an acidic solution to suitably activate the surface(s).

Coating of at least one of the internal surfaces with a coupling agent may be performed at a variety of stages during the process of the present invention.

In an embodiment, the internal surface of one or more of the panes of glass provided in step (i) is pre-coated (e.g. spray-coated). In such a case, suitably all internal surfaces are pre-coated. Such pre-coating may involve spreading the coupling agent (or a composition thereof) over an internal surface. Such spreading may be effected in a variety of ways well known to those skilled in the art. The pre-coating may involve removing excess coupling agent (or a composition thereof). The pre-coating may involve a drying step to remove some or all of any residual solvents. The pre-coating may involve a curing step to bond the coupling agent to the internal surface. Such curing may involve exposure to heat and/or radiative energy (e.g. UV), most suitably heat.

In another embodiment, the internal surface of one or more of the panes of glass provided in step (i) is coated following partial assembly of the glazing unit (i.e. after step ii)). Suitably, all internal surfaces are so coated. In this embodiment, the coupling agent (or composition thereof) is suitably delivered into the internal space *via* the opening in the peripheral seal. Suitably the partially assembled glazing unit is moved (e.g. tilted) so as to spread the coupling agent over the internal surfaces of the first and second panes (or third and subsequent panes where relevant). Suitably, once the internal surfaces of the first and second panes are coated with coupling agent, any excess coupling agent (or composition thereof) is removed *via* the opening in the peripheral seal (i.e. the excess coupling agent is drained from the internal space). Optionally, the internal surfaces are further rinsed, suitably by delivering a rinsing solvent to the internal space and duly eluting the internal surfaces with the rinsing solvent before removing the rinsing solvent from the internal space (suitably using the opening in the peripheral seal as aforedescribed). Curing of the coupling agent may suitably be effected to bond the coupling agent to the internal surface. Such curing may involve exposure to heat and/or radiative energy (e.g. UV), most suitably heat. This methodology may be considered advantageous as the internal space of the partially assembled glazing unit serves as a temporary container for the coupling agent whilst the internal surface(s) are coated, thus facilitating handling during manufacture.

In another embodiment, the coupling agent is present in the gelling composition itself. In such an embodiment, the one or more panes of glass provided in step i) may be pre-treated with the coupling agent-containing gelling composition as described above. Alternatively, the internal surface of one or more of the panes of glass may be coated following partial assembly of the glazing unit in the manner described above (i.e. by delivering a quantity of the coupling agent-containing gelling composition to the internal space, moving the glazing unit to spread the gelling composition over the internal surface(s), optionally removing excess gelling composition, and optionally curing to bond the coupling agent to the internal surface(s)).

However, in a particularly embodiment, where the coupling agent is comprised of the gelling composition, there is no pre-coating of the internal surface(s) with the coupling agent prior to delivering the gelling composition to the internal space as per step (iii). As such, coating with the coupling agent and delivery of the gelling composition may suitably take place simultaneously during step iii). Furthermore, curing of the coupling agent and gelling composition may also take place simultaneously during step iv).

Suitably, the coupling agent is cured so as to bond the coupling agent to the internal surface(s) prior to delivery of the gelling agent to the internal space.

Suitably, where the coupling agent is pre-coated upon the internal surface(s) prior to delivery of the gelling composition into the internal space, the coupling agent suitably does not (substantially and/or homogenously) mix with the gelling composition when the gelling composition is introduced to the internal space.

### Coupling agent and compositions thereof

The nature of the coupling agent has been described above in relation to the gelling composition. Preferably, however, the coupling agent is not provided within the gelling composition, but is instead provided as a distinct coupling agent composition.

A coupling agent composition suitably comprises the coupling agent and one or more solvents. Preferably, the coupling agent composition is an aqueous composition, though in some embodiments the coupling agent composition may be an organic solution, or an aqueous/organic solution of the coupling agent.

### The glazing unit in use

The glazing units of the present invention may be suitably fixed within a further external window frame.

As such, the present invention provides a window comprising one or more glazing units as described herein. Furthermore, the present invention also provides a building or vehicle comprising one or more windows in accordance with the present invention.

Glazing units of the present invention perform extremely well in the containment of fires on one side of the glazing unit. For instance, the cured gelling composition in the internal space of the glazing units insulates to retard heat transfer from the "fire-side" of the glazing unit to the "cold-side" eventually forming an appreciably solid crust thus maintaining integrity of the glazing unit and offering significant radiation reduction.

Suitably the gelling composition may be used to provide a fire-resistant barrier and/or a radiation barrier.

### EXAMPLES

Embodiments of the present invention, and relevant tests performed thereon, are now described in detail. It will be understood by those skilled in the art that the invention is not limited by the examples which follow, and that the examples support the broader applicability of the invention.

### The Glazing Unit

An embodiment of a glazing unit in accordance with the invention is illustrated in FIG. 1, which shows a cross-sectional view of a fire-resistant glazing unit. The glazed unit 10 has two parallel opposed rectangular panes of glass 1 separated at their peripheries by a spacer 2; an internal space 3 enclosed by the two opposed panes of glass 1 and the spacer 2; a cured hydrogel interlayer 3 filling the internal space 3; a secondary seal 4 comprising a suitable adhesive, such as polysulfide or a hot melt sealant, and a primary seal 5 comprising a suitable adhesive, such as butyl or an acrylic tape adhesive.

Each pane of glass 1 is typically toughened glass, each having a thickness of between 3 and 20mm (typically 4-6mm thick).

In the examples which follow, the spacer 2 consists of a single continuous piece which is bent into shape (i.e. substantially forming a rectangle). In alternative examples, the spacer consists of four separate pieces, one for each side of the rectangle. In the examples which follow, the spacers are made from metal or plastics material (see specific examples), and are 6-10mm thick (see later specific examples).

The spacer 2, together with the primary 5 and secondary 4 seals, may be considered to form a peripheral seal around the glazed unit.

The spacers 2 used in the present examples differ from those known in the art in that:
- solid plastic spacers are used instead of hollow spacers;
- the spacers used have no perforations;
- the spacers used do not contain desiccant;
- the spacers have an entrance hole suitable to facilitate filling with the gelling composition.

### General Method of Preparing a Gelling Composition

Gelling compositions of the present invention are suitably intended for injection into the internal space 3 for subsequent curing *in situ* to form the cured gel (or hydrogel) 3 described above. Embodiments of the pre-cured gelling compositions are described below, and contain various mixtures of ingredients, including water, one or more salts, a gel stabilising agent, and a hydrogel-forming monomer. Such gelling compositions are produced by mixing all the ingredients and suitably agitating at an appropriate temperature for sufficient time to produce a substantially clear, transparent solution. The gelling compositions are typically filtered and degassed prior to use.

The following general procedure was used to prepare the gelling compositions tested:

A flask fitted with an agitator was charged with water. This was followed by the addition of monomer (e.g. acrylic acid) followed by gel stabilising agent (e.g. tetraethoxysilane (TEOS)) and photoinitiator (e.g. Irgacure IR184). To the mixture were added MgO powder to form an aqueous suspension, N,N'-methylenebisacrylamide (MBA) crosslinker was added and reaction mixture stirred for 2 hours until the MBA and magnesium oxide were completely dissolved, yielding a clear solution. To this clear solution was added the salts (e.g. MgSO₄.7H₂O and Mg(OAc)₂.4H₂O) simultaneously while continuously stirring. The reaction mixture was subsequently allowed to become clear again. Finally the solution was allowed to cool and was filtered via 0.22µm membrane filter, and was subsequently stored at room temperature.

### General Method of Preparing the Glazing Unit

Glazed units 10, as described above, are prepared substantially in accordance with standard methods known in the art (e.g. US 2213468, US 3759771, US 2389360), albeit with the variations described below.

### Partial Assembly of Glazed Unit

In the present example, the glazed unit is partially assembled to include all but the cured gel 3 and primary seal 5. As such, the entrance holes (not shown) in the spacers provide access to the internal space 3 for the delivery of the pre-cured gelling composition.

### Priming of the Glass

Prior to injection of the gelling composition, the internal surfaces of the panes of glass 1 (i.e. those facing each other and in contact with the internal space 3) are treated with a polymerisable coupling agent (3-acryloxypropylmethoxysilane solution) to facilitate bonding between the panes of glass 1 and the cured gel 3. To this end, an aqueous/organic solution of the silane was injected through one of the entrance holes in the spacer, and the partially assembled glazed unit tilted and moved to ensure that all internal surfaces of the glass 2 are duly coated. The silane solution is then drained from the entrance holes before the internal space is rinsed with a rinsing solvent using the same injection, tilting/moving, and draining method. Finally, the coated surfaces are left at room temperature for 30 mins to allow the coating to bond to the surfaces. It will be understood by the skilled person that alternative coating methods may be employed, including applying the silane to the relevant surface as a spray.

### Injection of the Gelling Composition

The gelling composition (examples of which are set forth in the examples which follow) is filtered and degassed (e.g. *via* simultaneous sonication and evacuation) before then being pumped (as a clear solution) into the internal space 3 *via one of* the entrance holes in the spacer 2. Once the internal space 3 is completely filled with gelling composition, a primary seal 5 is secured to cover the entrance holes in the spacer 2 and duly close the internal space. In the present example, the entrance holes in the spacer are sealed with a silicone sealant.

### Curing of the Gelling Composition

The gelling composition within the internal space 3 is then cured *in situ* through appropriately irradiating the glazed unit upon acuring bed for a sufficient period of time with UV light

### Testing Protocols

### Primary testing

Gel compositions were assessed by the following primary criteria that a candidate gel be optically clear and free from haze by visual inspection; and appreciably stable.

### Secondary testing

### Low temperature service lifetime tests

Hydrogel-filled glazing units were each placed in freezer units held at -12 °C and -20 °C respectively; and defects were recorded periodically.

### Alternative High temperature service lifetime tests - accelerated aging

A series of non-standard service lifetime tests were performed upon samples (i.e. vials) of cured hydrogels. The service lifetime tests involved accelerated aging by exposing the vials of cured hydrogels to a temperature of either 80°C or 100°C for a time period, and monitoring the cured hydrogels for visible signs of degradation. A predicted lifetime for said cured hydrogels may then be ascertained through extrapolation using the Arrhenius equation.

A 10°C increase in temperature commonly produces a doubling in reaction rate. Therefore it can be said that when cured hydrogels are stored in sealed vials for 112 days at 80°C or 28 days at 100°C without visible sign of gel deformation it is indicative of a 20-year predicted lifetime. In practice the 100°C test was only considered for screening purposes due to the proximity of the boiling point of the formulation. The 80°C test is understood to provide more realistic lifetime prediction. A similar assumption was revealed in US6479156B1 where 60 days at 80°C was deemed an 'estimation for a term of 10 years guarantee'. Both the test described here and that revealed in US6479156B1 are far more aggressive than the standard service lifetime tests prescribed for 'Laminated glass and laminated safety glass' in EN 12543-4.

### Tertiary testing

### Fire Test

With a view to meeting or exceeding the European standard EI 30 classification filled units of gel formulation were glazed in a steel reusable frame unless otherwise stated using ceramic tape glazing media (unless otherwise stated) to prevent contact of the glass with the frame, and were each subjected to an indicative EN cellulosic fire resistance test at Exova (Warrington) or CGI France (Seingbouse) REF: EN 1364-1:1999, Fire resistance tests for non-loadbearing elements - Part 1: Walls. As per the standard; the cold side temperatures are measured by thermocouples that are adhered to the non-exposed face of the glazing and by a roving hand-held plate thermocouple. Radiation emission levels from the furnace through the glazing sample are measured using a water-cooled heat flux radiometer positioned central to the sample.

### Specific Examples

The following examples listed in Table 1 below are embodiments of gelling compositions of the invention, with the exception of Examples 12-19, and Comparative Examples 1 and 2 listed last. Each gelling composition was prepared as described in the *"General Method of Preparing a Gelling Composition"* above, and subsequently either incorporated into glazing units, using the above described methods, to provide glazing units containing the relevant cured gels within their internal spaces, or else stored in vials in a post-cured form. Each glazing unit or vial was then tested, using the above described test protocols, the results of which are presented below along with a description of the corresponding gelling compositions and also in the Summary section which follows the Examples.

The EI (fire) and service lifetime tests were performed as detailed above. The designation "x" in Table 1 below indicates that the relevant testing has not been performed.

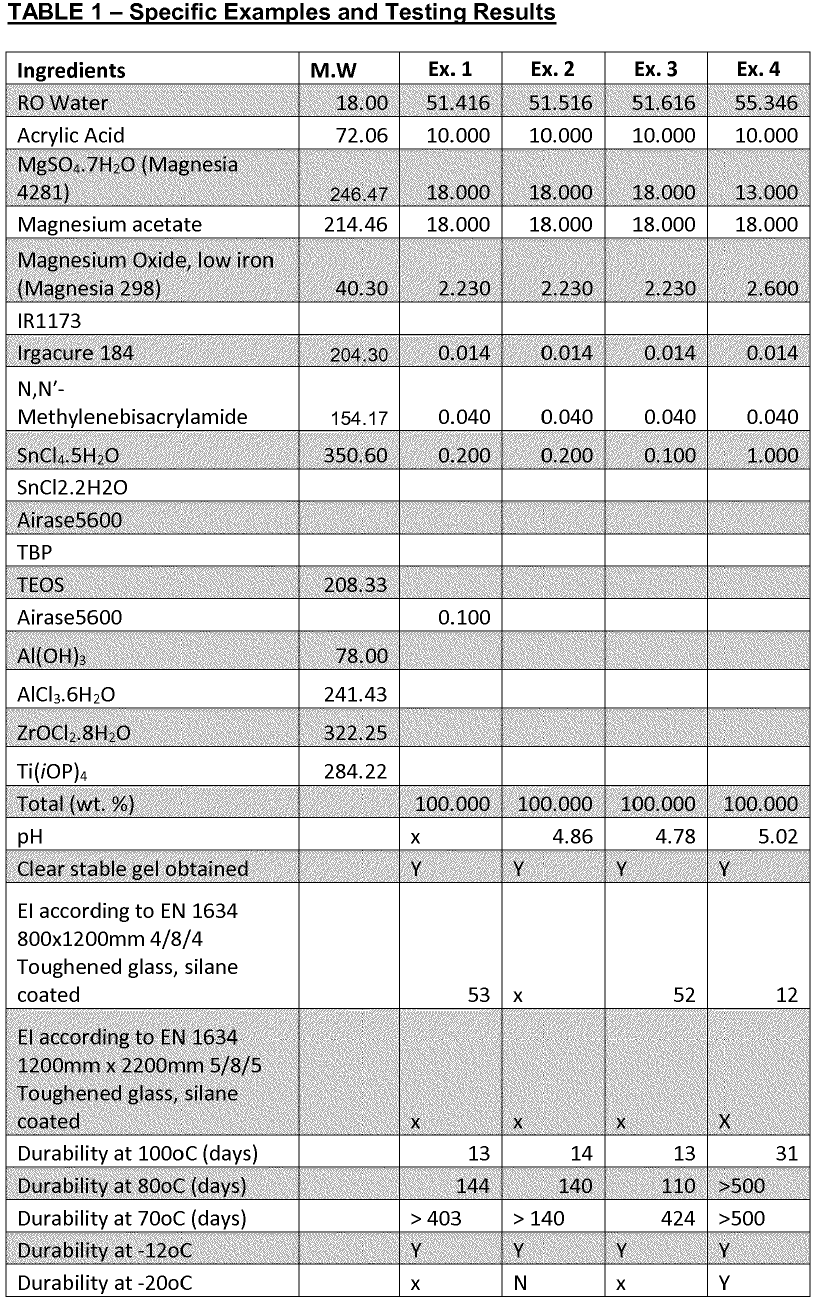

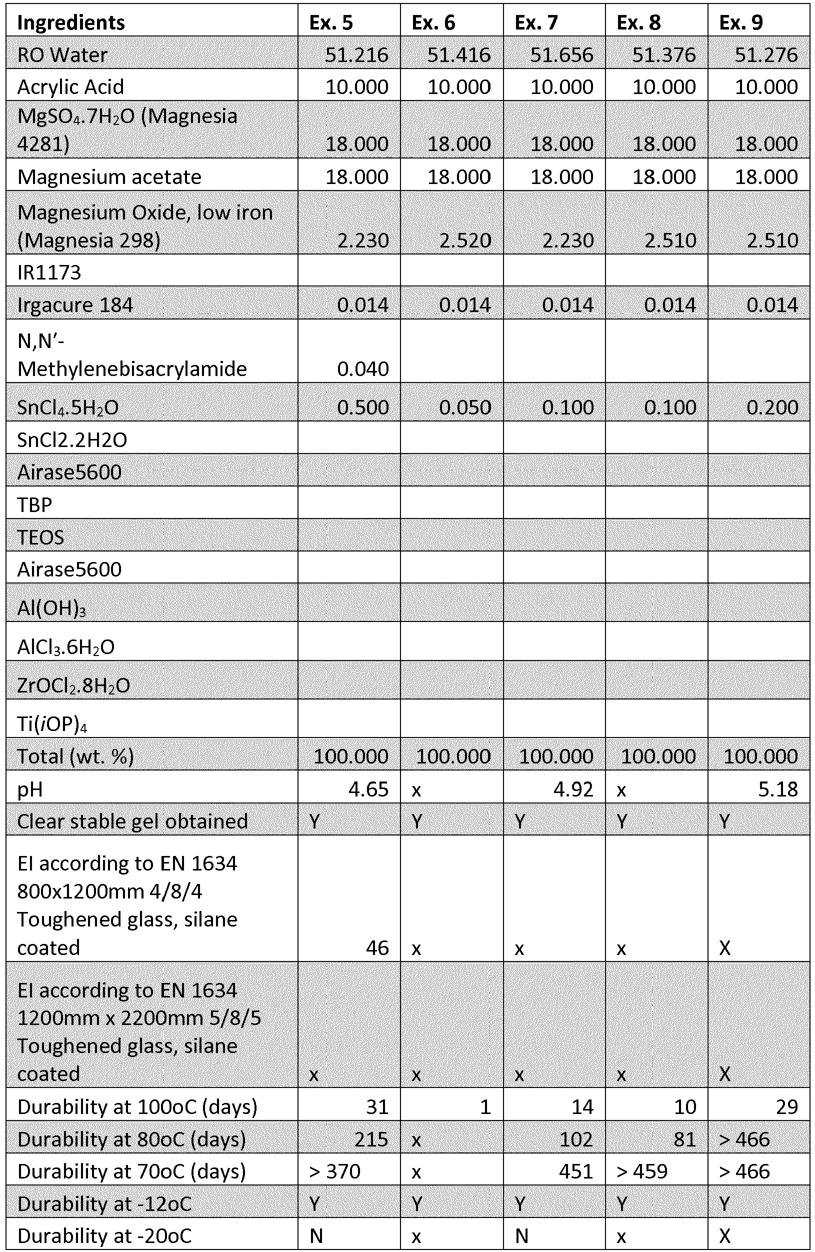

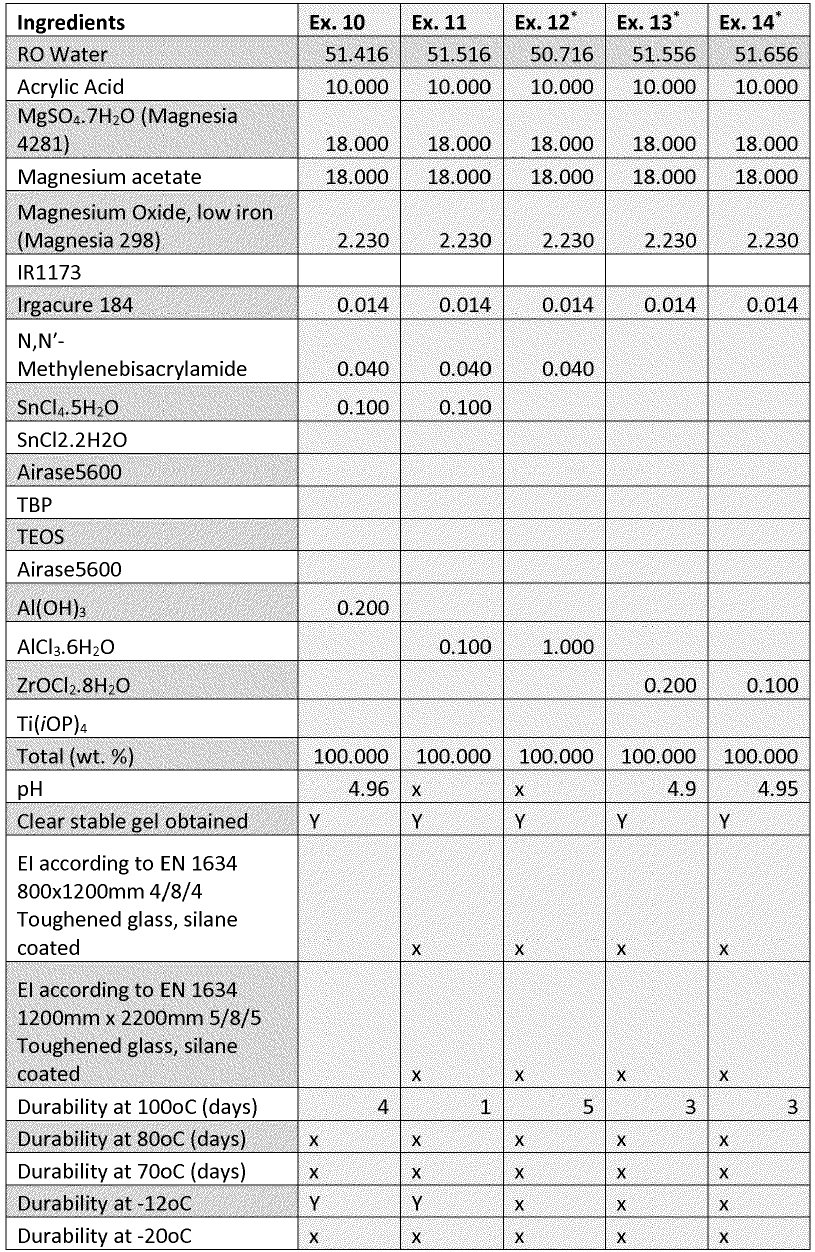

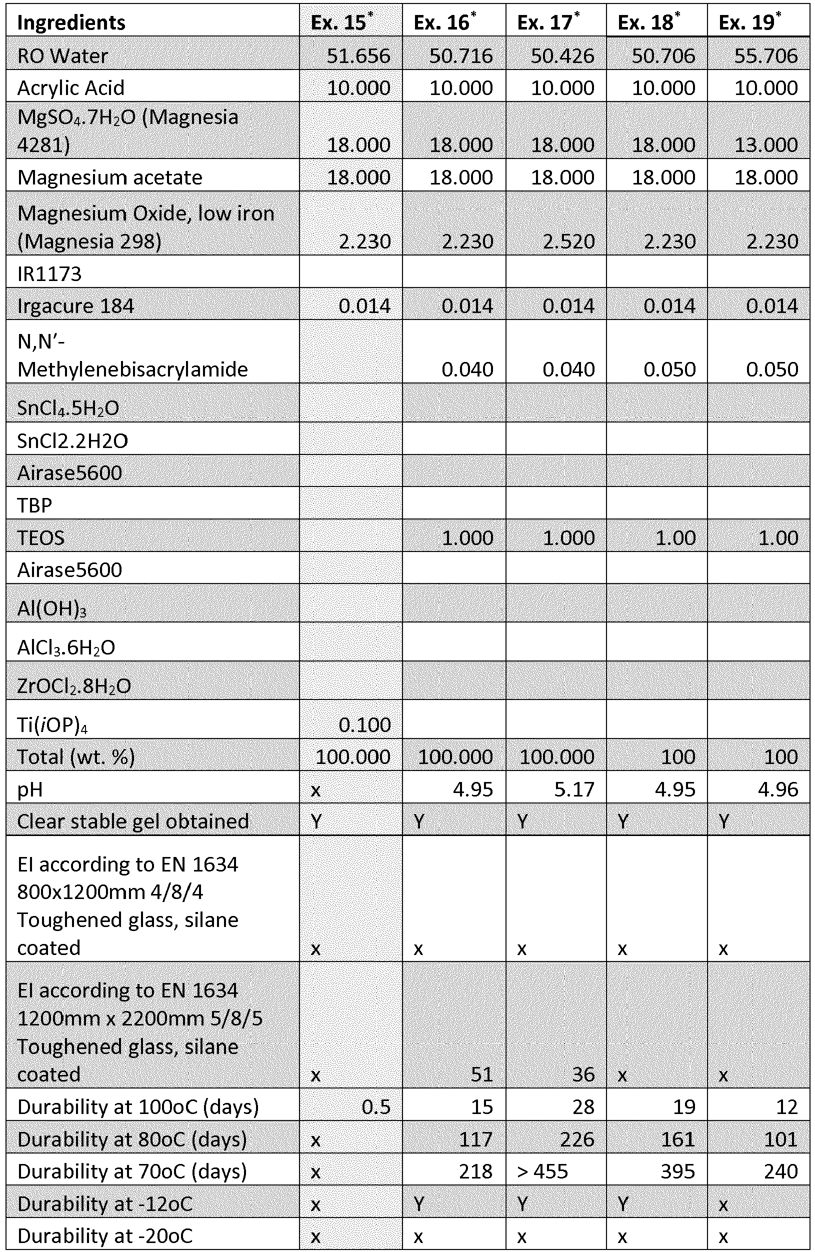

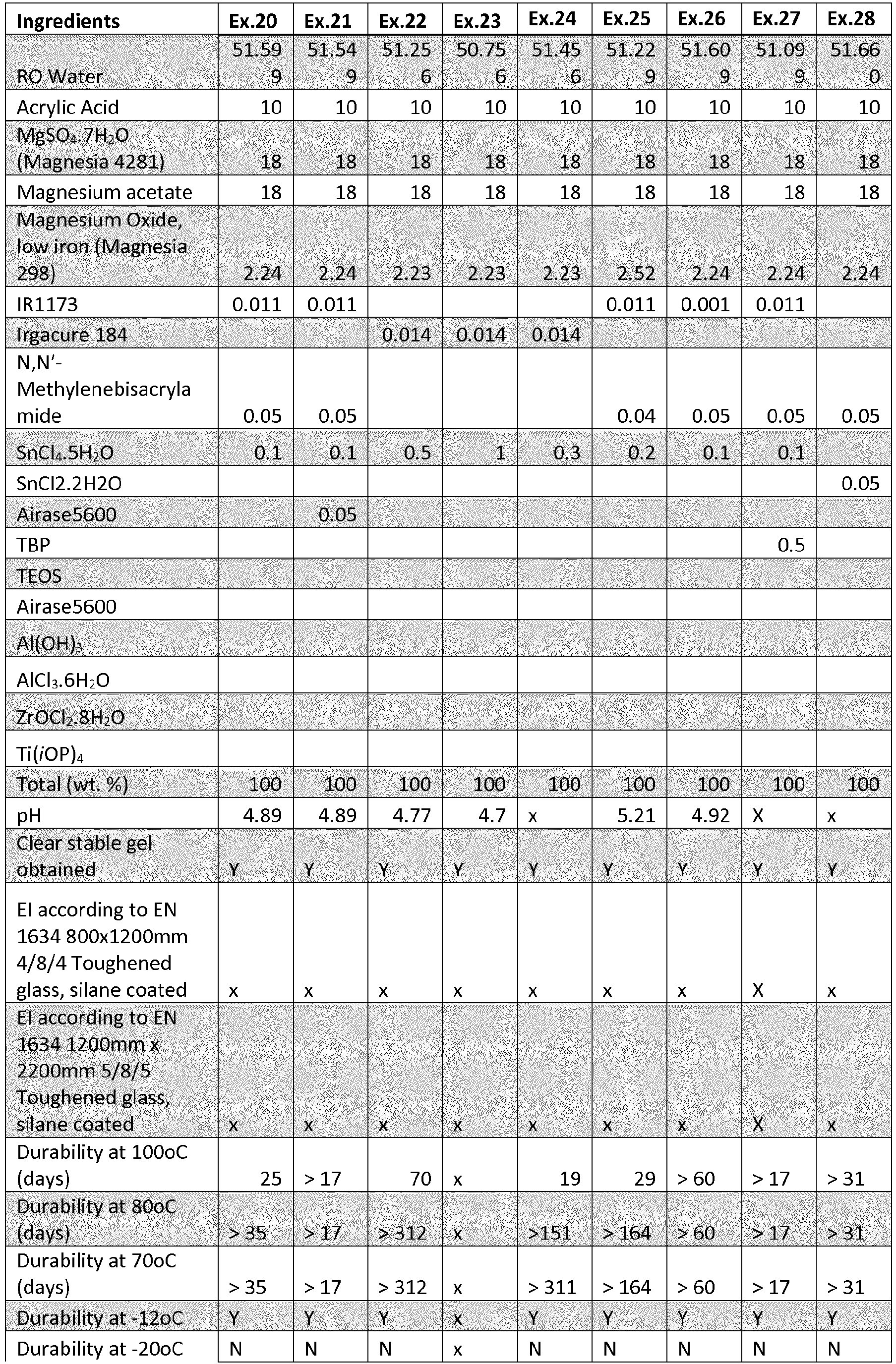

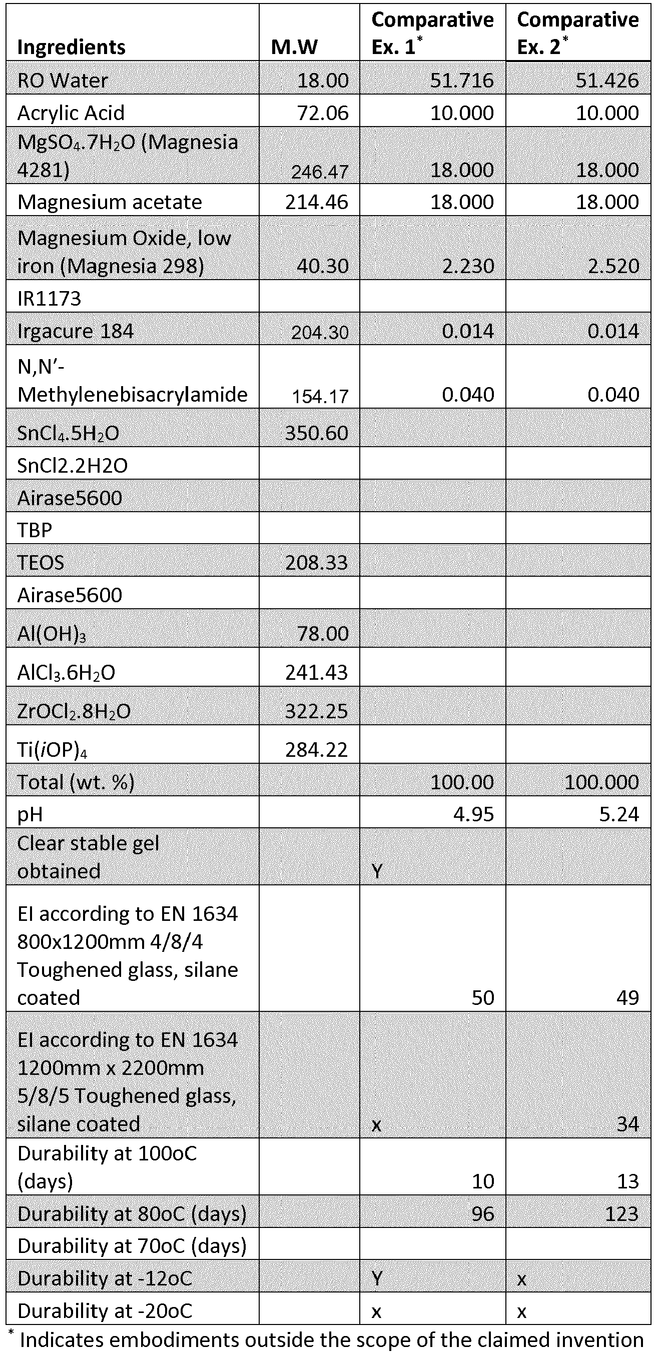

### Summary

The properties desired of gelling compositions (and their corresponding cured gel forms) in the context of the present invention are:
- Intumescence.
- Fire-resistance service lifetime as a fire-protective barrier to maintain integrity.
- Fire-resistance service lifetime as a fire-protective barrier to maintain integrity and insulation.
- Fire-resistance service lifetime as a fire-protective barrier to maintain integrity and radiation reduction.
- A high melting point crust.
- Stability over a wide range of operating temperatures, over prolonged time periods.
- Transparency and the retention thereof across a range of ambient temperatures.
- Low propensity to form bubbles in normal use.
- Protection of "cold side" glass in order to maintain integrity.
- Ability to harden on curing.
- Storage stability of uncured forms of the gelling composition.

The compositions of the present invention exhibit some or all of the above properties to varying degrees, and as such represent a contribution to the technical field of fire-resistant glazing units.

### CONCLUSION

Fire resistance requirements are becoming more stringent and fire resistant glazings that were once deemed satisfactory are being pushed out of use by trends in regulation. These trends in regulation are as a result of increased knowledge in fire safety engineering and changes in architectural fashion. It is believed that this invention is capable of meeting these new demands and exceeding the performance of many equivalent systems in the field in terms of it being of lesser mass per m² of glazing than other equivalent fire resistant products for a given duration of fire resistance and it being economical to produce. Moreover, certain components or combinations of components of the invention enhance hydrogel stability over time (as indicated in Table 1 above), thereby improving overall interlayer service lifetime. All of the components of the preferred embodiment are relatively easy to obtain and the production process can be a simple augment to a conventional IGU production line. Advantageously, the components of the preferred gelling compositions are relatively environmentally benign and as such do not pose significant hazard upon handling and disposal of components before or after gelling or during or after a fire has taken place.

## Claims

1. A glazing unit comprising a first transparent pane and a second transparent pane with an interlayer disposed therebetween, wherein the interlayer is a fire-resistant hydrogel interlayer formed by curing a gelling composition; wherein the gelling composition comprises or is obtained by mixing together:
a curable hydrogel-forming component;
one or more metal(I) and/or metal(II) salts;
a gel stabilising agent; and
an aqueous vehicle;
wherein the gel stabilising agent is (or comprises) a compound having a multivalent central tin (Sn) atom ;
wherein the composition has an acidic pH wherein the pH is greater than or equal to pH 3.

2. The glazing unit as claimed in any preceding claim, wherein the curable hydrogel-forming component comprises an acidic polymerisable polymer, and the composition has an acidic pH wherein the pH is greater than or equal to pH 3 and less than or equal to 6.9.

3. The glazing unit as claimed in any preceding claim, wherein the multivalent central tin (Sn) atom is tin (IV).

4. The glazing unit as claimed in claim 3, wherein the tin(IV) compound comprises displaceable/exchangeable leaving groups.

5. The glazing unit as claimed in claim 4, wherein the displaceable/exchangeable leaving groups are selected from halide, hydroxide, alkoxide, acetate, oxalate, acetylacetonate, alkanoate, sulphate, nitrate, lactate, carbonate.

6. The glazing unit as claimed in any preceding claim, wherein the gel stabilising agent is or comprises one or more compounds selected from:
SnCl₂, SnBr₂, SnCl₄, SnBr₄, Sn(II)Octoate, Sn(IV)Isopropoxide, Sn(IV)Ter-Butoxide, Sn(ll) acetate, Sn(II)Oxalate, Sn(IV)Oxalate, Sn(II)acetylacetonate, Dibutyltin bis(acetylacetonate), Dibutyltin dichloride, Dibutyltin dilaurate, Dibutyltin diacetate, Dibutyltin octoate, Tin(II)sulfate, Tin(IV)sulfate, Dimethyltin dichloride, Methyltin trichloride;
or a solvate or ligand complex thereof.

7. The glazing unit as claimed in any preceding claim, wherein the gel stabilising agent is or comprises a tin halide.

8. The glazing unit as claimed in any preceding claim, wherein the gel stabilising agent constitutes between 0.01 and 2.0% w/w of the total gelling composition.

9. The glazing unit as claimed in any preceding claim, wherein the gel stabilising agent is or comprises a tin(IV) compound with exchangeable/displaceable groups, ligands, or counterions, and the gel stabilising agent constitutes between 0.025 and 1.5% w/w of the total gelling composition; wherein the composition has a pH between pH 4 and pH 6.

10. The glazing unit as claimed in any preceding claim, wherein the pH of the gelling composition is between 4.65 and 5.25.

11. The glazing unit as claimed in any preceding claim, wherein the gelling composition comprises or is obtained by mixing together:
6-14% w/w of acrylic acid;
an effective non-solvated weight concentration of 15 to 30% w/w of one or more metal(I) and/or metal(II) salts comprising an Mg²⁺ cation and one or more anions selected from sulphate, acetate and oxide;
0.05 to 1.5% w/w gel stabilising agent;
40-90% w/w of an aqueous vehicle;
wherein the gel stabilising agent is a tin(IV) compound; wherein the composition has a pH between pH 4.7 and pH 5.3.

12. A gelling composition for forming a fire-resistant hydrogel interlayer, the gelling composition comprising or obtained by mixing together:
a curable hydrogel-forming component
one or more metal(I) and/or metal(II) salts;
a gel stabilising agent; and
an aqueous vehicle;
wherein the gel stabilising agent is (or comprises) a compound having a multivalent central tin (Sn) atom;
wherein the composition has an acidic pH wherein the pH is greater than or equal to pH 3.

13. A method of manufacturing a gelling composition for forming a fire-resistant hydrogel interlayer within a glazing unit, the method comprising mixing together:
a curable hydrogel-forming;
one or more metal(I) and/or metal(II) salts;
a gel stabilising agent; and
an aqueous vehicle;
wherein the gel stabilising agent is (or comprises) a compound having a multivalent central tin (Sn) atom;
wherein the composition has an acidic pH wherein the pH is greater than or equal to pH 3.

14. A process for forming a glazing unit, the process comprising:
i) providing a first and a second transparent pane;
ii) partially assembling the glazing unit such that the first and second transparent panes are spaced apart from one another and a sealing means holds the first and second panes in position; wherein:
the sealing means comprises an opening; and
the first and second panes and the sealing means together define an internal space;
iii) delivering a gelling composition, as claimed in claim 12, into the internal space through the opening in the sealing means;
iv) closing the opening in the sealing means to provide a sealed internal space; and
v) curing the gelling composition to provide a hydrogel gel interlayer within the internal space;
wherein the gel is bonded to the inner surfaces of the first and/or second transparent panes either inherently or by either coating at least one of the internal surfaces of the first and/or second panes with a coupling agent prior to step (iii) or incorporating the coupling agent into the gelling composition.

## Patentansprüche

1. Verglasungseinheit, umfassend eine erste transparente Scheibe und eine zweite transparente Scheibe mit einer dazwischen angeordneten Zwischenschicht, wobei die Zwischenschicht eine feuerfeste Hydrogel-Zwischenschicht ist, die durch das Aushärten einer Gelierungszusammensetzung ausgebildet wird; wobei die Gelierungszusammensetzung Folgendes umfasst oder durch das Vermischen davon erhalten wird:
eine aushärtbare Hydrogelausbildungskomponente;
ein oder mehrere Metall(I)- und/oder Metall(II)-Salze;
ein Gelstabilisierungsmittel; und
ein wässriges Vehikel;
wobei das Gelstabilisierungsmittel eine Verbindung mit einem multivalenten Zinn(Sn)-Zentralatom ist (oder diese umfasst);
wobei die Zusammensetzung einen sauren pH-Wert aufweist, wobei der pH-Wert größer oder gleich pH 3 ist.

2. Verglasungseinheit nach einem der vorhergehenden Ansprüche, wobei die aushärtbare Hydrogelausbildungskomponente ein saures polymerisierbares Polymer umfasst und die Zusammensetzung einen sauren pH-Wert aufweist, wobei der pH-Wert größer oder gleich pH 3 und kleiner oder gleich 6,9 ist.

3. Verglasungseinheit nach einem der vorhergehenden Ansprüche, wobei das multivalente Zinn(Sn)-Zentralatom Zinn(IV) ist.

4. Verglasungseinheit nach Anspruch 3, wobei die Zinn(IV)-Verbindung verschiebbare/austauschbare austretende Gruppen umfasst.

5. Verglasungseinheit nach Anspruch 4, wobei die verschiebbaren/austauschbaren austretenden Gruppen ausgewählt sind aus Halogenid, Hydroxid, Alkoxid, Acetat, Oxalat, Acetylacetonat, Alkanoat, Sulfat, Nitrat, Lactat, Carbonat.

6. Verglasungseinheit nach einem der vorhergehenden Ansprüche, wobei das Gelstabilisierungsmittel eine oder mehrere Verbindungen ist oder umfasst, die ausgewählt sind aus:
SnCl₂, SnBr₂, SnCl₄, SnBr₄, Sn(II)-octoat, Sn(IV)-isopropoxid, Sn(IV)-ter-butoxid, Sn(II)-acetat, Sn(II)-oxalat, Sn(IV)-oxalat, Sn(II)-acetylacetonat, Dibutylzinn-bis(acetylacetonat), Dibutylzinndichlorid, Dibutylzinndilaurat, Dibutylzinndiacetat, Dibutylzinnoctoat, Zinn(II)-sulfat, Zinn(IV)-sulfat, Dimethylzinndichlorid, Methylzinntrichlorid;
oder einem Solvat- oder Ligandenkomplex davon.

7. Verglasungseinheit nach einem der vorhergehenden Ansprüche, wobei das Gelstabilisierungsmittel ein Zinnhalogenid ist oder umfasst.

8. Verglasungseinheit nach einem der vorhergehenden Ansprüche, wobei das Gelstabilisierungsmittel zwischen 0,01 und 2,0 Gew.-% der gesamten Gelierungszusammensetzung darstellt.

9. Verglasungseinheit nach einem der vorhergehenden Ansprüche, wobei das Gelstabilisierungsmittel eine Zinn(IV)-Verbindung mit austauschbaren/verschiebbaren Gruppen, Liganden oder Gegenionen ist oder umfasst und das Gelstabilisierungsmittel zwischen 0,025 und 1,5 Gew.-% der gesamten Gelierungszusammensetzung darstellt; wobei die Zusammensetzung einen pH-Wert zwischen pH 4 und pH 6 aufweist.

10. Verglasungseinheit nach einem der vorhergehenden Ansprüche, wobei der pH-Wert der Gelierungszusammensetzung zwischen 4,65 und 5,25 liegt.

11. Verglasungseinheit nach einem der vorhergehenden Ansprüche, wobei die Gelierungszusammensetzung Folgendes umfasst oder durch das Vermischen davon erhalten wird:
6-14 Gew.-% Acrylsäure;
eine effektive nicht solvatisierte Gewichtskonzentration von 15 bis 30 Gew.-% von einem oder mehreren Metall(I)- und/oder Metall(II)-Salzen, die ein Mg²⁺-Kation und ein oder mehrere Anionen umfassen, die ausgewählt sind aus Sulfat, Acetat und Oxid;
0,05 bis 1,5 Gew.-% Gelstabilisierungsmittel;
40-90 Gew.-% eines wässrigen Vehikels;
wobei das Gelstabilisierungsmittel eine Zinn(IV)-Verbindung ist; wobei die Zusammensetzung einen pH-Wert zwischen pH 4,7 und pH 5,3 aufweist.

12. Gelierungszusammensetzung zum Ausbilden einer feuerfesten Hydrogel-Zwischenschicht, wobei die Gelierungszusammensetzung Folgendes umfasst oder durch das Vermischen davon erhalten wird:
eine aushärtbare Hydrogelausbildungskomponente;
ein oder mehrere Metall(I)- und/oder Metall(II)-Salze;
ein Gelstabilisierungsmittel; und
ein wässriges Vehikel;
wobei das Gelstabilisierungsmittel eine Verbindung mit einem multivalenten Zinn(Sn)-Zentralatom ist (oder diese umfasst);
wobei die Zusammensetzung einen sauren pH-Wert aufweist, wobei der pH-Wert größer oder gleich pH 3 ist.

13. Verfahren zum Herstellen einer Gelierungszusammensetzung zum Ausbilden einer feuerfesten Hydrogel-Zwischenschicht innerhalb einer Verglasungseinheit, wobei das Verfahren der Vermischen von Folgendem umfasst:
einer aushärtbaren Hydrogelausbildungskomponente;
einem oder mehreren Metall(I)- und/oder Metall(II)-Salzen;
einem Gelstabilisierungsmittel; und
einem wässriges Vehikel;
wobei das Gelstabilisierungsmittel eine Verbindung mit einem multivalenten Zinn(Sn)-Zentralatom ist (oder diese umfasst);
wobei die Zusammensetzung einen sauren pH-Wert aufweist, wobei der pH-Wert größer oder gleich pH 3 ist.

14. Prozess zum Ausbilden einer Verglasungseinheit, wobei der Prozess Folgendes umfasst:
i) Bereitstellen einer ersten und einer zweiten transparenten Scheibe;
ii) partielles Zusammensetzen der Verglasungseinheit, derart, dass die erste und die zweite transparente Scheibe voneinander beabstandet sind und ein Dichtmittel die erste und die zweite Scheibe an Ort und Stelle hält; wobei:
das Dichtmittel eine Öffnung umfasst; und
die erste und die zweite Scheibe und das Dichtmittel zusammen einen Innenraum definieren;
iii) Abgeben einer Gelierungszusammensetzung nach Anspruch 12 in den Innenraum durch die Öffnung in dem Dichtmittel;
iv) Verschließen der Öffnung in dem Dichtmittel, um einen abgedichteten Innenraum bereitzustellen; und
v) Aushärten der Gelierungszusammensetzung, um eine Hydrogel-Gel-Zwischenschicht innerhalb des Innenraums bereitzustellen;
wobei das Gel an den Innenflächen der ersten und/oder der zweiten transparenten Scheibe haftet, und zwar entweder inhärent oder durch entweder Beschichten von mindestens einer der Innenflächen der ersten und/oder der zweiten Scheibe mit einem Kopplungsmittel vor Schritt (iii) oder durch das Aufnehmen des Kopplungsmittels in die Gelierungszusammensetzung.

## Revendications

1. Unité de vitrage comprenant une première vitre transparente et une seconde vitre transparente, une couche intermédiaire se trouvant entre elles, ladite couche intermédiaire étant une couche intermédiaire d'hydrogel résistant au feu étant formée par durcissement d'une composition gélifiante ; ladite composition gélifiante comprenant ou étant obtenue en mélangeant ensemble :
un composant durcissable formant un hydrogel ;
un ou plusieurs sels de métal du groupe (I) et/ou de métal du groupe (II) ;
un agent de stabilisation de gel ; et
un véhicule aqueux ;
ledit agent de stabilisation de gel étant (ou comprenant) un composé comportant un atome d'étain (Sn) central multivalent ;
ladite composition ayant un pH acide, ledit pH étant supérieur ou égal à pH 3.

2. Unité de vitrage selon l'une quelconque des revendications précédentes, ledit composant durcissable formant un hydrogel comprenant un polymère polymérisable acide, et ladite composition ayant un pH acide, ledit pH étant supérieur ou égal à pH 3 et inférieur ou égal à pH 6,9.

3. Unité de vitrage selon l'une quelconque des revendications précédentes, ledit atome d'étain (Sn) central multivalent étant un atome d'étain(IV).

4. Unité de vitrage selon selon la revendication 3, ledit composé d'étain (IV) comprenant des groupes partants déplaçables/échangeables.

5. Unité de vitrage selon la revendication 4, lesdits groupes partants déplaçables/échangeables étant choisis parmi les groupes halogénure, hydroxyde, alcoxyde, acétate, oxalate, acétylacétonate, alcanoate, sulfate, nitrate, lactate, carbonate.

6. Unité de vitrage selon l'une quelconque des revendications précédentes, ledit agent de stabilisation de gel étant ou comprenant un ou plusieurs composés choisis parmi :
SnCl₂, SnBr₂, SnCl₄, SnBr₄, l'octoate de Sn(II), l'isopropoxyde de Sn(IV), le tert-butoxyde de Sn(IV), l'acétate de Sn(II), l'oxalate de Sn(II), l'oxalate de Sn(IV), l'acétylacétonate de Sn(II), le bis(acétylacétonate) de dibutylétain, le dichlorure de dibutylétain, le dilaurate de dibutylétain, le diacétate de dibutylétain, l'octoate de dibutylétain, le sulfate d'étain(II), le sulfate d'étain(IV), le dichlorure de diméthylétain, le trichlorure de méthylétain ;
ou un solvate ou un complexe ligand de ceux-ci.

7. Unité de vitrage selon l'une quelconque des revendications précédentes, ledit agent de stabilisation de gel étant ou comprenant un halogénure d'étain.

8. Unité de vitrage selon l'une quelconque des revendications précédentes, ledit agent de stabilisation de gel constituant entre 0,01 % et 2,0 % en p/p de la composition gélifiante totale.

9. Unité de vitrage selon l'une quelconque des revendications précédentes, ledit agent de stabilisation de gel étant ou comprenant un composé d'étain(IV) doté de groupes échangeables/déplaçables, de ligands ou de contre-ions, et ledit agent de stabilisation de gel constituant entre 0,025 % et 1,5 % en p/p de la composition gélifiante totale ; la composition ayant un pH compris entre pH 4 et pH 6.

10. Unité de vitrage selon l'une quelconque des revendications précédentes, ledit pH de la composition gélifiante étant compris entre 4,65 et 5,25.

11. Unité de vitrage selon l'une quelconque des revendications précédentes, ladite composition gélifiante comprenant ou étant obtenue en mélangeant ensemble :
6 à 14 % en p/p d'acide acrylique ;
une concentration massique non solvatée efficace de 15 à 30 % en p/p d'un ou plusieurs sels de métal du groupe (I) et/ou de métal du groupe (II) comprenant un cation Mg²⁺ et un ou plusieurs anions choisis parmi les anions sulfate, acétate et oxyde ;
0,05 à 1,5 % en p/p d'agent de stabilisation de gel ;
40 à 90 % en p/p d'un véhicule aqueux ;
ledit agent de stabilisation de gel étant un composé d'étain(IV) ; ladite composition ayant un ph compris entre pH 4,7 et pH 5,3.

12. Composition gélifiant destinée à former une couche intermédiaire d'hydrogel résistant au feu, la composition gélifiante comprenant ou étant obtenue en mélangeant ensemble :
un composant durcissable formant un hydrogel ;
un ou plusieurs sels de métal du groupe (I) et/ou de métal du groupe (II) ;
un agent de stabilisation de gel ; et
un véhicule aqueux ;
ledit agent de stabilisation de gel étant (ou comprenant) un composé comportant un atome d'étain (Sn) central multivalent ;
ladite composition ayant un pH acide, ledit pH étant supérieur ou égal à pH 3.

13. Procédé de fabrication d'une composition gélifiante destinée à former une couche intermédiaire d'hydrogel résistant au feu avec une unité de vitrage, le procédé comprenant le fait de mélanger ensemble :
un composant durcissable formant un hydrogel ;
un ou plusieurs sels de métal du groupe (I) et/ou de métal du groupe (II) ;
un agent de stabilisation de gel ; et
un véhicule aqueux ;
ledit agent de stabilisation de gel étant (ou comprenant) un composé comportant un atome d'étain (Sn) central multivalent ;
ladite composition ayant un pH acide, ledit pH étant supérieur ou égal à pH 3.

14. Procédé de formation d'une unité de vitrage, le procédé comprenant :
i) la fabrication d'une première et d'une seconde vitre transparente ;
ii) l'assemblage partiel de l'unité de vitrage de sorte que les première et seconde vitres transparentes soient espacées l'une de l'autre et qu'un moyen d'étanchéité maintienne les première et seconde vitres en position ;
dans lequel :
le moyen d'étanchéité comprend une ouverture ; et
les première et seconde vitres et le moyen d'étanchéification définissent ensemble un espace interne ;
iii) l'administration d'une composition gélifiante, selon la revendication 12, dans l'espace interne à travers l'ouverture dans le moyen d'étanchéité ;
iv) la fermeture de l'ouverture dans le moyen d'étanchéité pour fournir un espace interne fermé hermétiquement ; et
v) le durcissement de la composition gélifiante pour fournir une couche intermédiaire de gel d'hydrogel au sein de l'espace interne ;
ledit gel étant collé aux surfaces internes des première et/ou seconde vitres transparentes soit intrinsèquement soit par revêtement d'au moins l'une des surfaces internes des première et/ou seconde vitres avec un agent de couplage avant l'étape (iii) ou incorporation de l'agent de couplage au sein de la composition gélifiante.
